# EUROPEAN PATENT APPLICATION

(11) **EP 4 644 028 A1**
(43) Date of publication of application: **05.11.2025**
(21) Application number: 25165489.3
(22) Date of filing: 21.03.2025
(51) Int. Cl.: B23K 9/095, B23K 9/173, B23K 9/32, B23K 37/04, G09B 5/02, G09B 19/24

(54) **NON-TRANSITORY COMPUTER READABLE MEDIUM AND METHOD FOR JOINT CALIBRATION FOR PORTABLE WELDING TECHNIQUE MONITORING SYSTEM**

(30) Priority: 22.03.2024 US 202463568541 P; 09.05.2024 US 202463644714 P; 09.05.2024 US 202463644716 P; 10.05.2024 US 202463645505 P; 20.03.2025 US 202519086049
(71) Applicant: Illinois Tool Works Inc., Glenview IL 60025 (US)
(72) Inventor: BECKER, William Joshua, Glenview 60025 (US); KOPAC III, Jordan J., Glenview 60025 (US); BEATHAM, Benjamin, Glenview 60025 (US)
(74) Representative: HGF

(57) **Abstract**

The present application relates to a portable technique monitoring system (100) providing lightweight, user-friendly, self-contained, and/or highly portable means for monitoring the technique of operators during a welding-type operation, and/or providing technique feedback. The portable technique monitoring system (100) is designed to work with a mobile device that is relatively low cost and highly portable (e.g., as compared to some other expensive and/or stationary sensors/processors used in other monitoring systems). The portable technique monitoring system (100) can also work with standard and/or common workpieces, tools, and/or equipment. The few custom components that are required for the portable technique monitoring system (100) are relatively low cost, lightweight, and highly portable, as is the system (100) itself, making it a very attractive solution for technique monitoring in both training and production scenarios.

## Description

### CROSS REFERENCE TO RELATED APPLICATIONS

This application claims priority to, and the benefit of, (i) U.S. Provisional Patent Application No. 63/568,541, filed March 22, 2024, entitled "PORTABLE WELDING TECHNIQUE MONITORING SYSTEMS," (ii) U.S. Provisional Patent Application No. 63/644,714, filed May, 9, 2024, entitled "POSITIONING STANDS OF PORTABLE WELDING TECHNIQUE MONITORING SYSTEMS," (iii) U.S. Provisional Patent Application No. 63/644,716, filed May 9, 2024, entitled "WORKPIECE ORIENTATION DETECTION IN PORTABLE WELDING TECHNIQUE MONITORING SYSTEMS," and (iv) U.S. Provisional Patent Application No. 63/645,505, filed May 10, 2024, entitled "JOINT CALIBRATIONS FOR PORTABLE WELDING TECHNIQUE MONITORING SYSTEMS," all of which are hereby incorporated by reference in their entirety.

### TECHNICAL FIELD

The present disclosure generally relates to portable welding technique monitoring systems, and, more particularly, to joint calibrations for portable welding technique monitoring systems.

### BACKGROUND

Welding technique generally refers to the way in which a welding operator positions, moves, and/or manipulates a welding-type tool relative to a workpiece (and/or a welding joint of the workpiece), such as, for example, during a welding-type operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to joint calibrations for portable welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIGS. 1a-1e show examples of a welding-type system, in accordance with aspects of this disclosure.
FIGS. 2a-2e show examples of a portable technique monitoring system that might be used in and/or with the welding-type system of FIGS 1a-1e, in accordance with aspects of this disclosure.
FIG. 3 is a flowchart illustrating an example operation of a training process of the portable technique monitoring system of FIGS. 2a-2e, in accordance with aspects of this disclosure.
FIGS. 4a-4c show example outputs of a mobile device of the portable technique monitoring system of FIGS. 2a-2e, such as might be output during the training process of FIG. 3, in accordance with aspects of this disclosure.
FIGS. 5a-5b shows examples of a welding-type tool used with portable technique monitoring system of FIGS. 2a-2e, such as might occur during the training process of FIG. 3, in accordance with aspects of this disclosure.
FIG. 6 is a flowchart illustrating an example operation of a joint calibration process of the training process of FIG. 3, in accordance with aspects of this disclosure.
FIGS. 7a-7b illustrate how a calibration tool might be used to identify (e.g., end) points of a joint of a workpiece, such as might occur during the joint calibration process of FIG. 6, in accordance with aspects of this disclosure.
FIGS. 8a-8h show example outputs of the mobile device of the portable technique monitoring system of FIGS. 2a-2e, such as might be output during the joint calibration process of FIG. 6, in accordance with aspects of this disclosure.
FIGS. 9a-14b show examples of alternative portable technique monitoring systems that might be used in and/or with the welding system of FIGS 1a-1e, in accordance with aspects of this disclosure.
FIGS. 15a-16b show examples of positioning stand couplers that might be used to couple any of the portable technique monitoring systems of FIGS. 2a-2e and/or 9a-13b to the a positioning stand, in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to welding technique monitoring systems that are low-cost, lightweight, user friendly, self contained, and highly portable (providing a marked advantage over legacy monitoring systems that use heavy welding stands that are difficult to move). The portable monitoring systems are designed to work with mobile devices that have sensor and processing capabilities useful for technique monitoring. The mobile devices themselves are also relatively low cost and highly portable (e.g., as compared to some other expensive and/or stationary sensor/processing systems used in other monitoring systems).

The portable monitoring systems can also accommodate live welding on a wide variety of standard metal workpieces with a variety of standard welding-type tools. While the technique monitoring systems can additionally accommodate custom (e.g., mock) workpieces and/or custom (e.g., mock) welding-type tools used in some simulated welding systems, such custom components are not required. The few custom components that are required are relatively low cost, lightweight, and highly portable, as is the system itself, making it a very attractive solution for technique monitoring in both training and production scenarios.

Some examples of the present disclosure relate to a non-transitory computer readable medium comprising machine readable instructions which, when executed by processing circuitry, cause the processing circuitry to: identify a joint calibration area within which a joint of a workpiece should be positioned to enable tracking of a welding-type tool when the welding-type tool performs a welding-type operation at the joint; and output, via a user interface, a depiction of the joint calibration area.

In some examples, the joint calibration area is identified based on workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation. In some examples, the machine readable instructions, when executed by processing circuitry, further cause the processing circuitry to: identify a calibration tool position of a calibration tool based on tool tracking sensor data captured by a tool tracking sensor; and determine whether the calibration tool position is within the joint calibration area. In some examples, the machine readable instructions, when executed by processing circuitry, further cause the processing circuitry to: in response to determining the calibration tool position is not within the joint calibration area: update the depiction to indicate that the calibration tool is not within the joint calibration area, output a notification, via the user interface, indicating that the calibration tool is not within the joint calibration area, or output guidance, via the user interface, advising how to bring the calibration tool within the joint calibration area.

In some examples, the machine readable instructions, when executed by processing circuitry, further cause the processing circuitry to: in response to determining the calibration tool position is within the joint calibration area, determine a joint position or a joint orientation of the joint based on the calibration tool position. In some examples, the tool tracking sensor data comprises first tool tracking sensor data captured by the tool tracking sensor at a first time, and the machine readable instructions, when executed by processing circuitry, further cause the processing circuitry to: identify a welding-type tool position or a welding-type tool orientation of a welding-type tool based on second tool tracking sensor data captured by the tool tracking sensor at a second time; determine a welding technique parameter based on the joint position or the joint orientation of the joint, and the welding-type tool position or the welding-type tool orientation of the welding-type tool; and output the welding technique parameter via the user interface. In some examples, the first time is not during a welding-type operation and the second time is during the welding-type operation.

Some examples of the present disclosure relate to a method, comprising: identifying, via processing circuitry, a joint calibration area within which a joint of a workpiece should be positioned to enable tracking of a welding-type tool via a tool tracking sensor when the welding-type tool performs a welding-type operation; and outputting, via a user interface, a graphical depiction highlighting the joint calibration area relative to the tool tracking sensor.

In some examples, the joint calibration area is identified based on a workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation. In some examples, the method further comprises identifying, via the processing circuitry, a calibration tool position of a calibration tool based on tool tracking sensor data captured by a tool tracking sensor; and determining whether the calibration tool position is within the joint calibration area. In some examples, the method further comprises in response to determining the calibration tool position is not within the joint calibration area: update the depiction to indicate that the calibration tool is not within the joint calibration area, output a notification, via the user interface, indicating that the calibration tool is not within the joint calibration area, or output guidance, via the user interface, advising how to bring the calibration tool within the joint calibration area.

In some examples, the method further comprises in response to determining the calibration tool position is within the joint calibration area, determining, via the processing circuitry, a joint position or a joint orientation of the joint based on the calibration tool position. In some examples, the tool tracking sensor data comprises first tool tracking sensor data captured by the tool tracking sensor at a first time, the method further comprising: identify a welding-type tool position or a welding-type tool orientation of a welding-type tool based on second tool tracking sensor data captured by the tool tracking sensor at a second time; determine a welding technique parameter based on the joint position or the joint orientation of the joint, and the welding-type tool position or the welding-type tool orientation of the welding-type tool; and output the welding technique parametervia the user interface. In some examples, the first time is not during a welding-type operation and the second time is during the welding-type operation.

Some examples of the present disclosure relate to a welding-type system, comprising: processing circuitry configured to identify a joint calibration area within which a joint of a workpiece should be positioned to enable tracking of a welding-type tool when the welding-type tool performs a welding-type operation at the joint; and a user interface configured to output a depiction of the joint calibration area.

In some examples, the joint calibration area is identified based on workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation. In some examples, the processing circuitry is further configured to: identify a calibration tool position of a calibration tool based on tool tracking sensor data captured by a tool tracking sensor; and determine whether the calibration tool position is within the joint calibration area. In some examples, the processing circuitry is further configured to: in response to determining the calibration tool position is not within the joint calibration area: update the depiction to indicate that the calibration tool is not within the joint calibration area, output a notification, via the user interface, indicating that the calibration tool is not within the joint calibration area, or output guidance, via the user interface, advising how to bring the calibration tool within the joint calibration area.

In some examples, the processing circuitry is further configured to: in response to determining the calibration tool position is within the joint calibration area, determine a joint position or a joint orientation of the joint based on the calibration tool position. In some examples, the tool tracking sensor data comprises first tool tracking sensor data captured by the tool tracking sensor at a first time, and the processing circuitry is further configured to: identify a welding-type tool position or a welding-type tool orientation of a welding-type tool based on second tool tracking sensor data captured by the tool tracking sensor at a second time, determine a welding technique parameter based on the joint position or the joint orientation of the joint, and the welding-type tool position or the welding-type tool orientation of the welding-type tool, and output the welding technique parameter via the user interface.

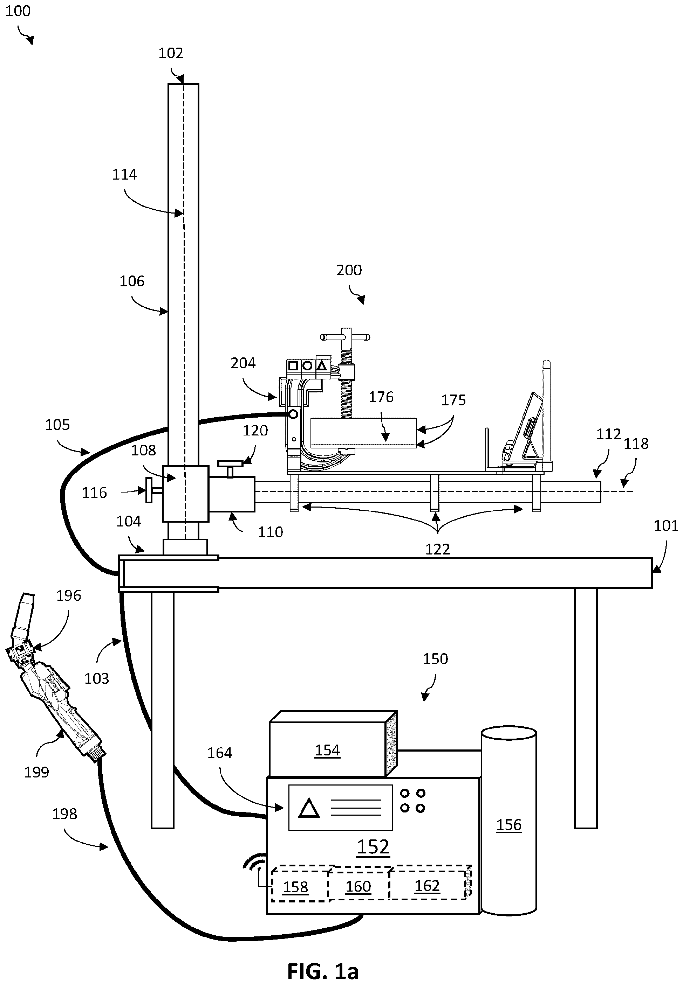

FIGS. 1a-1e show examples of a welding-type system 100. The welding-type system 100 is shown as including a portable technique monitoring system 200 held by (and/or connected/coupled/attached to) a positioning stand 102. The welding-type system 100 is additionally shown as including welding-type equipment 150 electrically connected to a (e.g., electrically conductive and/or metallic) welding table 101, to which the positioning stand 102 is in also shown as being attached/connected. The welding-type system 100 is additionally shown as including a welding-type tool 199 that is electrically connected with the welding-type equipment 150 via tool cable 198.

In the example of FIGS. 1a-1b, the welding-type equipment 150 includes a welding-type power supply 152, a wire feeder 154, and a gas supply 156, interconnected with one another. In some examples, the wire feeder 154 includes one or more motorized rollers configured to feed wire from a wire spool in the wire feeder 154 to the welding-type tool 199 (e.g., via the welding-type power supply 152 and/or tool cable 198). In some examples, the gas supply 156 supplies gas to welding-type tool 199 (e.g., via the welding-type power supply 152, wire feeder 154, and/or tool cable 198). In some examples, the power supply 152 is configured to supply welding-type power to the welding-type tool 199 (e.g., via tool cable 198).

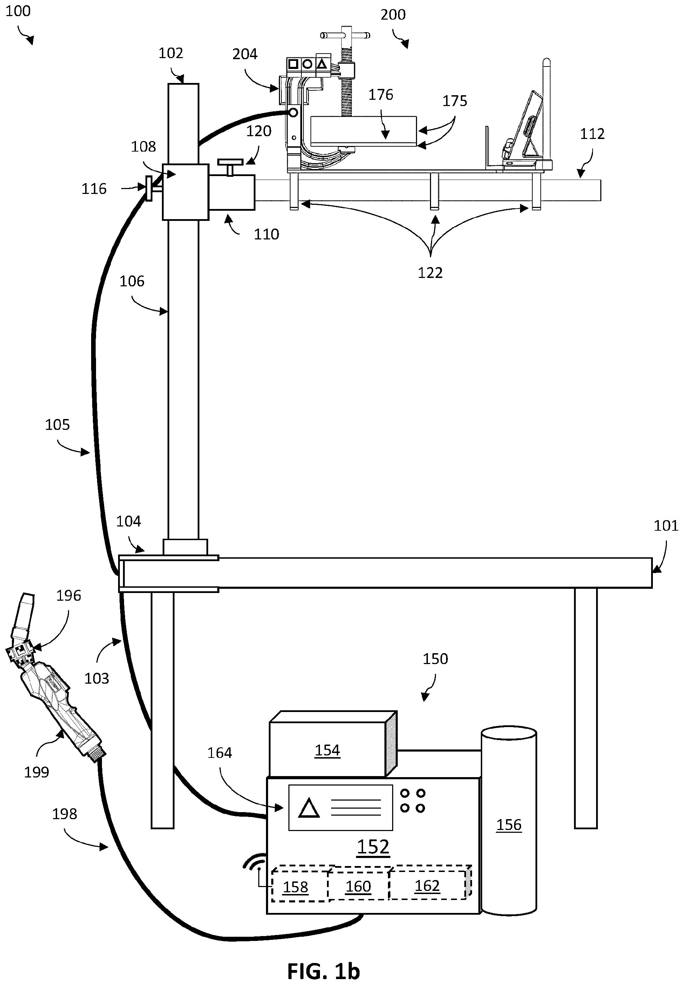

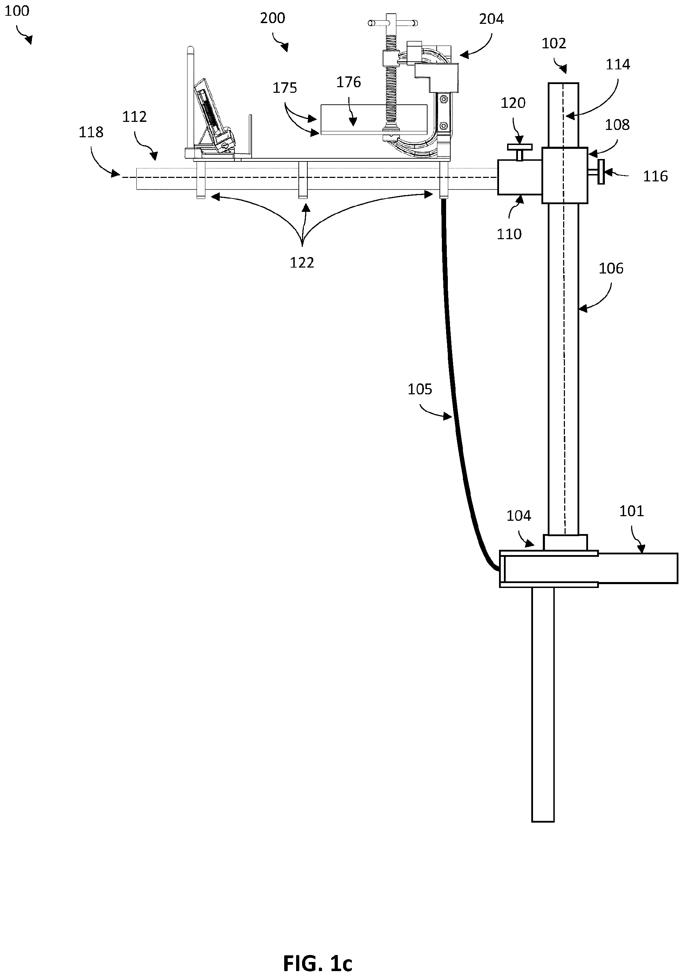

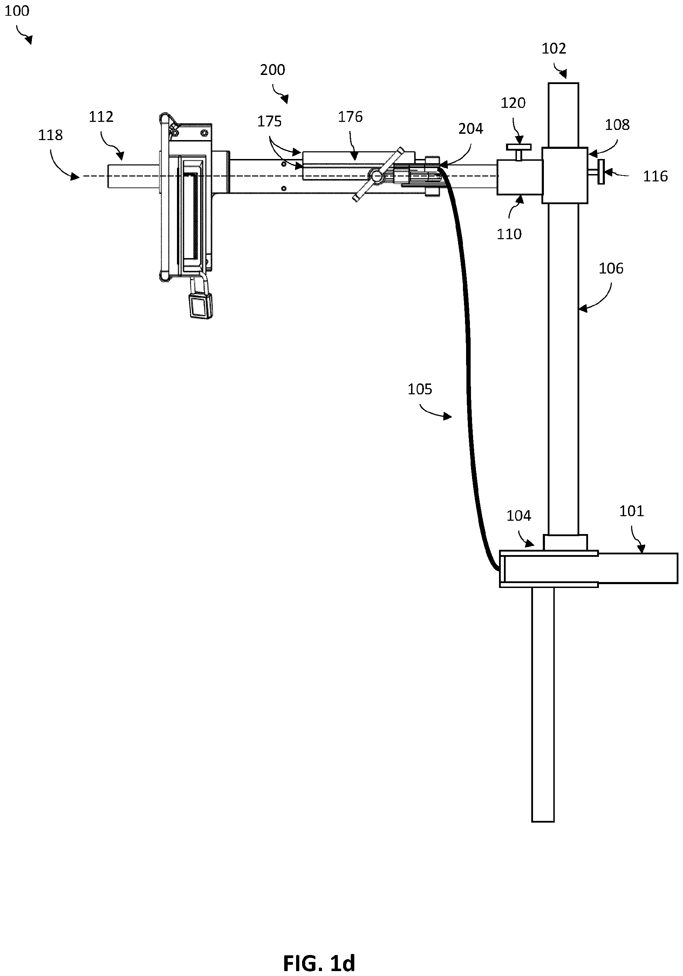

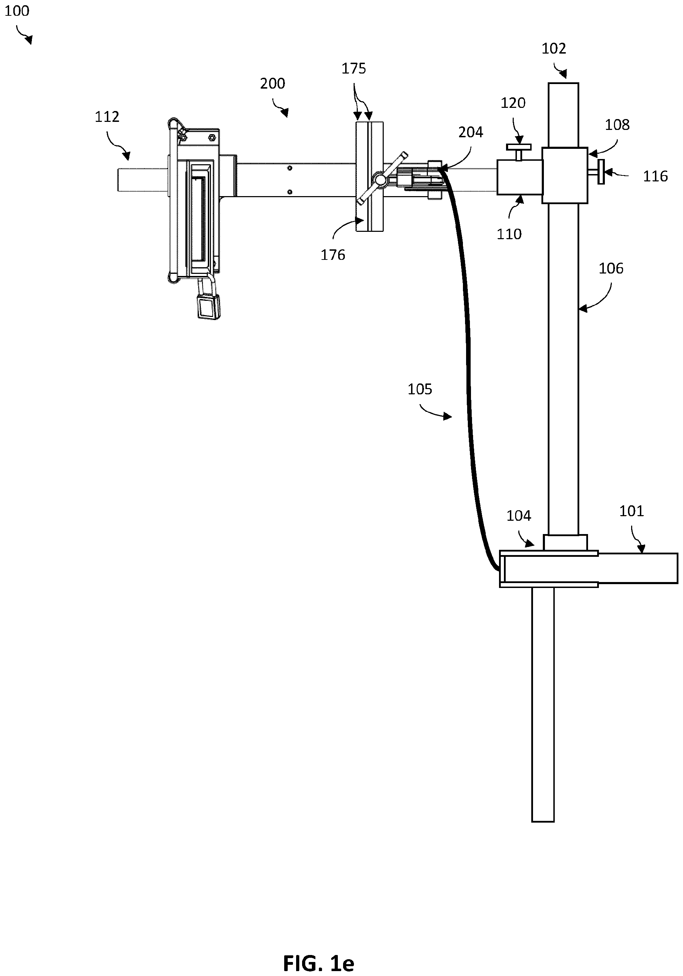

In the example of FIG. 1, the power supply 152 includes equipment communication circuitry 158, control circuitry 160, and power conversion circuitry 162 interconnected with one another. In some examples, the power supply 152 communicates with one or more external devices via one or more signals sent or received by the equipment communication circuitry 158. In some examples, the power conversion circuitry 162 is configured to receive input power (e.g., from a generator, a battery, mains power, etc.) and convert the input power to welding-type output power, such as might be suitable for use by the welding-type tool 199 for welding-type operations. In some examples, the control circuitry 160 is configured to control operation of the equipment communication circuitry 158, power conversion circuitry 162, wire feeder 154, and/or gas supply 156 (e.g. via one or more control signals and/or in accordance with one or more equipment parameters).

In the example of FIG. 1, the welding-type equipment 150 further includes an operator interface 164. In some examples, the operator interface 164 comprises one or more display screens, touch screens, knobs, buttons, levers, switches, microphones, speakers, lights, and/or other mechanisms through which an operator may provide input to, and/or receive output from, the welding-type equipment 150. For example, an operator may use the operator interface 164 to input one or more equipment parameters (e.g., target voltage, target current, target wire feed speed, wire/filler type, wire/filler diameter, gas type, target gas flow rate, welding-type process, material type of workpiece 175, thickness of workpiece 175, etc.). As another example, the operator may use the operator interface 164 to view and/or otherwise understand the current equipment parameters of the welding-type equipment 150.

In the examples of FIGS. 1a-1b, the welding-type equipment 150 is connected with the welding table 101 (and/or positioning stand 102) via a work cable 103, and connected with the welding-type tool 199 via a tool cable 198. In some examples, welding-type power, welding wire, and/or gas for a welding-type operation (e.g., welding arc) is provided to the welding-type tool 199, by the welding-type equipment 150, via the tool cable 198. In some examples, the welding-type tool 199 may transmit one or more signals to the welding-type equipment 150 when activated (e.g., via the tool cable 198), and the welding-type equipment 150 may provide the welding-type power, welding wire, and/or gas for the welding-type operation in response.

While depicted in FIGS. 1a-1b as a metal inert gas (MIG) welding torch or gun configured for gas metal arc welding (GMAW), in some examples, the welding-type tool 199 may instead be a different welding-type tool 199. For example, the welding-type tool 199 may be a stick electrode holder (i.e., stinger) configured for shielded metal arc welding (SMAW), a tungsten inert gas (TIG) torch and/or filler rod configured for gas tungsten arc welding (GTAW), a welding gun configured for flux-cored arc welding (FCAW), and/or a plasma cutter. In some examples, the welding-type tool 199 may be a mock welding-type tool, and/or be configured for mock (as opposed to live) welding-type operations, such as for (e.g., virtual/augmented reality) weld training.

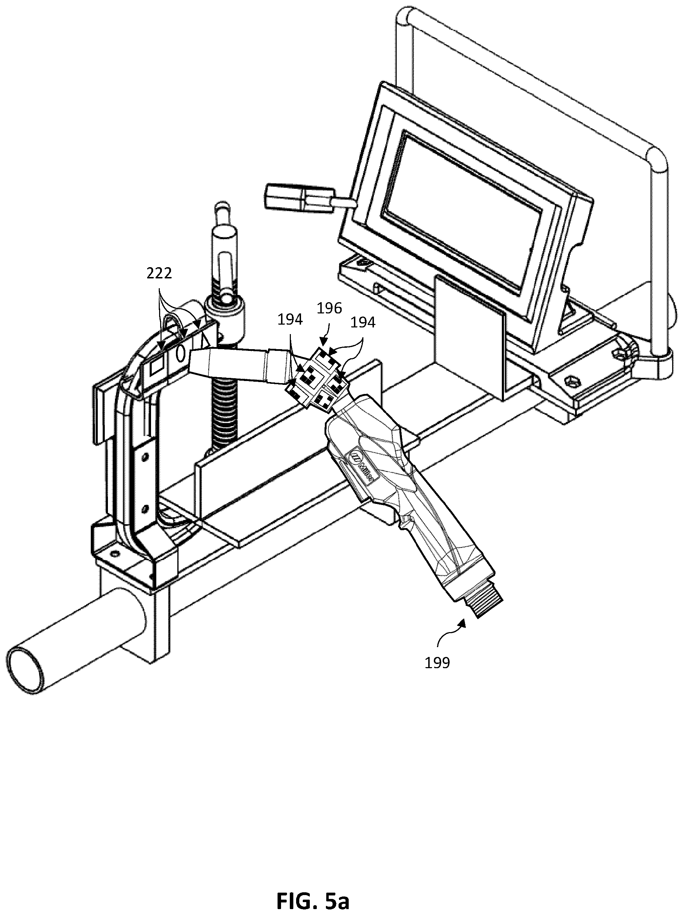

In the example of FIGS. 1a-1b, the welding-type tool 199 includes a marker attachment 196 attached to a neck of the welding-type tool 199. In some examples, examples, the marker attachment 196 is attachable to, and/or detachable from, the welding-type tool199. As shown, the marker attachment 196 includes several markers 194 (see, e.g., FIG. 5a).

In some examples, the markers 194 assist the portable technique monitoring system 200 in identifying a type of welding-type tool199, and/or tracking the position and/or orientation of the welding-type tool 199. For example, the markers 194 may be more easily recognizable by the technique monitoring system 200 in (e.g., image) data captured by sensors of the technique monitoring system 200 than the welding-type tool 198 itself. In some examples, the relative positions and/or orientations of markers 194 recognized in captured (e.g., image) data may be compared with known and/or stored tool (e.g., model) data to determine a type of welding-type tool 199. In some examples, known and/or stored tool (e.g., model and/or dimension) data relating to a particular welding-type tool 199 may be used in conjunction with the relative positions and/or orientations of the recognized markers 194 on the welding-type tool 198 (and/or marker attachment 196) to determine positions and/or orientations of particular portions of the welding-type tool 199 (e.g., nozzle, tip, handle, etc.).

In some examples, one or more of the markers 194 may be passive markers 194 that require no electrical power to operate, such as, for example, reflective markers 194 and/or pattern markers 194. In some examples, one or more of the markers 194 may be active markers 194 that are electrically powered, such as, for example, IR light emitting diodes (LEDs), and/or fiducial markers (e.g., IR light sources partially covered by light blocking patterns).

In some examples, positioning the markers 194 on a marker attachment 196 that is attachable to, and/or detachable from, the welding-type tool 199, allows the welding technique monitoring system 200 to be easily used with existing welding-type tools 199 and/or welding-type equipment 150. And the ability to use existing welding-type tools 199 and/or welding-type equipment 150 eliminates (or substantially reduces) the need for special and/or costly customized welding-type tools 199 and/or welding-type equipment 150 to work with the portable technique monitoring system 200.

In the examples of FIGS. 1a-1e, the portable technique monitoring system 200 is held by and/or coupled to the positioning stand 102. The positioning stand 102 is shown as including a positioning stand base 104 that is clamped and/or otherwise securely connected to the welding table 101. The positioning stand 102 is also shown as including a cylindrical positioning stand post 106 that extends away from, and is connected to, the positioning stand base 104.

The positioning stand 102 is further shown as including a cylindrical positioning stand post sleeve 108. The positioning stand post sleeve 108 is shown encircling and/or secured to the positioning stand post 106.

The positioning stand 102 is also shown as including a positioning stand arm sleeve 110 that is connected to the positioning stand post sleeve 108. The positioning stand arm sleeve 110 is shown encircling one end of a cylindrical positioning stand support arm 112. The positioning stand support arm 112 is further shown as extending approximately perpendicular to the positioning stand post 106.

In some examples, the positioning stand post sleeve 108 can be moved to different positions along the positioning stand post 106. FIG. 1a, for example, shows the positioning stand post sleeve 108 at a position on the positioning stand post 106 that is closer to the positioning stand base 104, while FIG. 1b shows the positioning stand post sleeve 108 at a position on the positioning stand post 106 that is farther from the positioning stand base 104. In some examples, the positioning stand post sleeve 108 can be moved to and/or between any position along the positioning stand post 106. In some examples, the positioning stand post sleeve 108 can only be moved to and/or between certain discrete positions along the post 106 (and/or only secured/connected to the positioning stand post 106 at those discrete positions).

In some examples, the positioning stand post sleeve 108 can also be rotated about the positioning stand post 106 (and/or about a longitudinal post axis 114 of the positioning stand post 106) to different orientations. FIGS. 1a-1b, for example, show the positioning stand post sleeve 108 at a first orientation, while FIGS. 1c-1e show the positioning stand post sleeve 108 at a second orientation (e.g., rotated 180 degrees from the first orientation). In some examples, the positioning stand post sleeve 108 can be moved to and/or between any orientation relative to the post axis 114. In some examples, the positioning stand post sleeve 108 can only be moved to and/or between certain discrete orientations relative to the post axis 114 (and/or only secured/connected to the positioning stand post 106 at those discrete orientations).

In the example of FIGS. 1a-1e, the positioning stand post sleeve 108 includes a post sleeve adjustment knob 116 that can be used by an operator to adjust the position and/or orientation of the positioning stand post sleeve 108. For example, the post sleeve adjustment knob 116 might be connected to a pin that extends through aligned pin holes in the positioning stand post 106 and positioning stand post sleeve 108 to secure the positioning stand post sleeve 108 at a particular position and/or orientation relative to the positioning stand post 106. In such an example, removing the pin from the aligned pin holes (e.g., via the post sleeve adjustment knob 116) allows the positioning stand post sleeve 108 to be moved to a different position and/or orientation (e.g., where the pin hole of the positioning stand post sleeve 108 can be aligned with a different pin hole of the positioning stand post 106, and/or resecured via the pin of the post sleeve adjustment knob 116).

As another example, the post sleeve adjustment knob 116 might be connected to a screw fastener, such that turning the post sleeve adjustment knob 116 tightens and/or loosens the connection of the positioning post sleeve 108 to the positioning stand post 106 (e.g., via an internal fastening and/or coupling mechanism). In such an example, loosening the screw connection between the positioning post sleeve 108 and the positioning stand post 106 (e.g., via the post sleeve adjustment knob 116) allows the positioning stand post sleeve 108 to be moved to a different position and/or orientation. Once moved, the connection between the positioning post sleeve 108 and the positioning stand post 106 can be reestablished, resecured, and/or retightened (e.g., via the post sleeve adjustment knob 116).

Because the positioning stand arm sleeve 110 (and positioning stand support arm 112) are connected to the positioning stand post sleeve 108, the positioning stand arm sleeve 110 and positioning stand support arm 112 change positions when the positioning stand post sleeve 108 changes positions. Additionally, because of the connection, the positioning stand arm sleeve 110 and positioning stand arm 112 change orientations (e.g., relative to the longitudinal post axis 114) when the positioning stand post sleeve 108 changes orientations.

In some examples, the positioning stand support arm 112 can also be spun about its own longitudinal arm axis 118, to change its own orientation (relative to its axis 118). In some examples, the positioning stand support arm 112 can be moved to and/or between any orientation relative to the arm axis 118. In some examples, the positioning stand support arm 112 can only be moved to and/or between certain discrete orientations relative to the arm axis 118 (and/or only secured/connected to the positioning stand arm sleeve 110 at those discrete orientations). In the example of FIGS. 1a-1e, the positioning stand arm sleeve 110 includes an arm sleeve adjustment knob 120 that, in some examples, can be used by an operator to adjust the orientation of the positioning stand support arm 118 (e.g., via a pin and/or fastening mechanism, similar to that which is discussed above).

In the examples of FIGS. 1a-1e, the portable technique monitoring system 200 is connected to the positioning stand support arm 112 by several support connectors 122 (e.g., brackets). In some examples, the connection between the portable technique monitoring system 200 and the positioning stand support arm 112 means that the orientation of the portable technique monitoring system 200 (e.g., relative to the longitudinal arm axis 118) changes when (and/or to the same degree that) the orientation of the positioning stand support arm 112 changes (e.g., relative to the longitudinal arm axis 118). FIGS. 1c-1d, for example, show how the portable technique monitoring system 200 might be moved between two different orientations (e.g., approximately 90 degrees apart) when the positioning stand support arm 112 is moved between two different orientations (e.g., relative to the arm axis 118).

In some examples, due to the connection between the portable technique monitoring system 200, the positioning stand support arm 112, the positioning stand arm sleeve 110, and the positioning stand post sleeve 108, the position of the of the portable technique monitoring system 200 changes when (and/or to the same degree that) the position of the positioning stand post sleeve 108 changes. In some examples, due to these same connections, the orientation of the portable technique monitoring system 200 changes when (and/or to the same degree that) the orientation of the positioning stand post sleeve 108 changes (e.g., relative to the longitudinal post axis 114). FIGS. 1a-1c, for example, show how the portable technique monitoring system 200 might be moved to different positions and/or orientations when (and/or to the same degree that) the positioning stand post sleeve 108 is moved to different positions and/or orientations.

In some examples, the ability to move the portable technique monitoring system 200 to different positions and/or orientations facilitates the ability of the portable technique monitoring system 200 to accommodate different operator, workpiece 175, and/or welding-type operation positions and/or orientations. In some examples, the ability of the positioning stand 102 to move the portable technique monitoring system 200 to different positions and/or orientations further facilitates the ability of the portable technique monitoring system 200 to accommodate different operator characteristics and/or preferences (e.g., left handed vs. right handed holding of the welding-type tool 199).

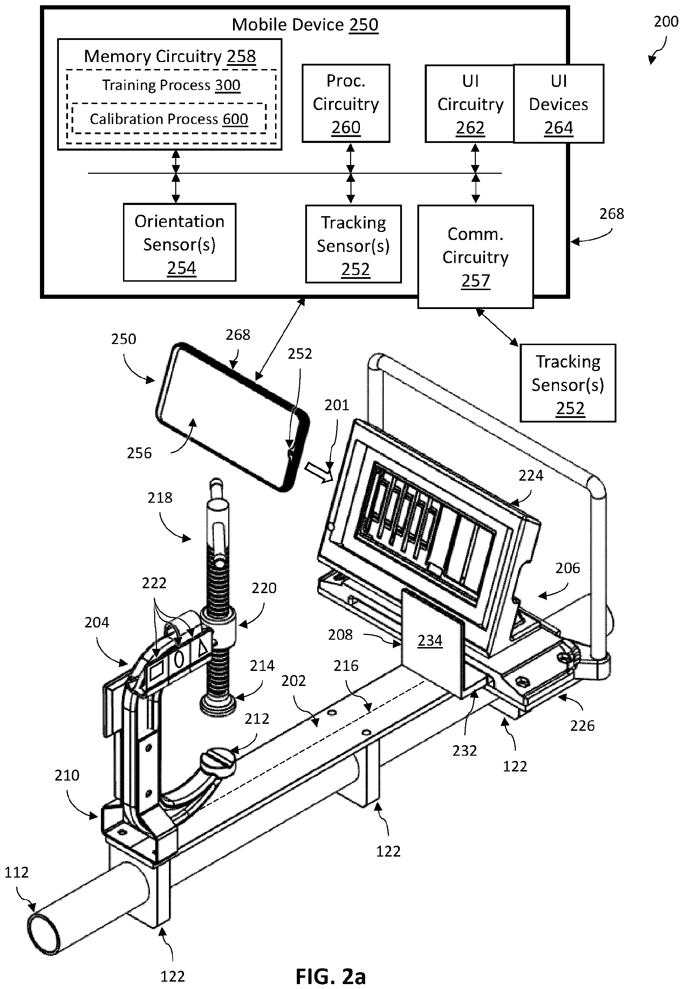

FIGS. 2a-2e show enlarged examples of the portable technique monitoring system 200. As shown, the portable technique monitoring system 200 includes a support platform 202, a workpiece holder 204 connected to the support platform 202 at one end of the support platform 202, a mobile device holder 206 connected to the support platform 202 at an opposite end of the support platform 202, a mobile device 250 held by the mobile device holder 206, and a light blocker 208 attached to the support platform 202 between the mobile device holder 206 and the workpiece holder 204.

In the examples of FIGS. 2a-2e, the support platform 202 is shown as being a flat, rectangular strip of material. As shown, the support platform 202 is connected to (and thereby connects the portable technique monitoring system 200 to) the positioning stand support arm 112 via the support connectors 122 (e.g., brackets). When the support platform 202 is connected with the positioning stand support arm 112 (e.g., via support connectors 122), the support platform moves with the positioning stand support arm 112.

In some examples, the support platform 202 is an electrically conductive material, such as a metallic material (e.g., aluminum, steel, etc.). In some examples, the electrically conductive material of the support platform 202 may facilitate formation of a welding circuit. In some examples, the electrically conductive material of the support platform 202 may facilitate electrical conduction between a workpiece 175 and an electrical cable 105 that is attached to (and/or electrically connected with) the support platform 202 (see, e.g., FIGS. 1a-13).

In the example of FIGS. 1a-1e, the portable technique monitoring system 200 is shown as being electrically connected with the positioning stand base 104 and/or the (e.g., electrically conductive) welding table 101 via an electrical cable 105. In particular, the electrical cable 105 is shown as being connected with the workpiece holder 204 of the portable technique monitoring system 200 via a fastener (though, in some examples, the electrical cable 105 may alternatively, or additionally connect to/with the support platform 202 or the workpiece 175 itself). In some examples, the electrical cable 105 may be needed to make electrical connection between the portable technique monitoring system 200 and the welding table 101 because some components of the positioning stand 102 (e.g., the positioning stand post sleeve 108 and/or positioning stand arm sleeve 110) are comprised of electrically insulating material (e.g., plastic).

In the examples of FIG. 2a the workpiece holder 204 is shown as being a C clamp. In some examples, the workpiece holder 204 may alternatively, or additionally, be comprised of a different kind of clamp, a fastener, and/or a magnetic coupler. In the examples of FIG. 2a, the workpiece holder 204 is shown as being attached to the support platform 202 via a workpiece holder connector 210 (e.g., bracket). In some examples, the workpiece holder 204 and/or workpiece holder connector 210 may be comprised of an electrically conductive material (e.g., to help form and/or facilitate a welding circuit).

In some examples, the workpiece holder 204 is configured to hold a workpiece 175 in place so that the workpiece 175 remains stationary prior to, during, and/or after a welding-type operation. In the example of FIG. 2a, the workpiece holder 204 includes a clamp pad 212 and a screw pad 214 between which a workpiece 175 may be clamped and/or held. The clamp pad 212 is shown as having a flat pad surface that is approximately parallel with the surface of the support platform 202. The clamp pad 212 is further shown as being centrally positioned within respect to the support platform 202, such that the clamp pad 212 is approximately aligned with a center longitudinal platform axis 216 of the support platform 202

The screw pad 214 of the workpiece holder 204 is also shown as being approximately centrally positioned with respect to the support platform 202. The screw pad 214 is also shown as having a flat screw pad surface that is approximately parallel with the surface of the support platform 202 (and/or the clamp pad 212). In the example of FIG. 2a, the screw pad 214 is further shown as being part of a clamp screw 218.

In the example of FIG. 2a, the clamp screw 218 is shown as having screw threads that engage with complementary screwthreads of a clamp screw holder 220 of the workpiece holder 204. In some examples, the screw pad 214 is moved closer to the clamp pad 212 by turning the clamp screw 218 in one direction, and moved farther from the clamp pad 212 by turning the clamp screw 218 in the opposite direction.

In the examples of FIG. 2a an array of user interface (UI) panels 222 are shown attached to the workpiece holder 204. Each UI panel 222 is shown as being etched with and/or having attached a different identifier (e.g., shape, color, symbol, alphanumeric, etc.). In the example of FIG. 2a each identifier of the UI panels 222 is a shape (e.g., a circle, a square, a triangle, etc.).

While only three UI panels 222 are shown in the example of FIG. 2a, in some examples, more or fewer UI panels 222 (and/or shapes) may be used. In some examples, the same identifier is shown on both sides of each UI panel 222. In some examples, a different identifier is shown on an opposite side of each UI panel 222.

In some examples, each identifier of each UI panel 222 corresponds to a particular type of user input. In some examples, the particular input may change depending on the particular state/stage of the portable technique monitoring system 200. In some examples, the identifier/input associated with a UI panel 22 may be entered by positioning the welding-type tool 199 proximate the UI panel 222 and/or orienting the welding-type tool 199 towards the UI panel 222 for a threshold amount of time (e.g., as shown in FIG. 5a). In some examples, instead of holding the welding-type tool 199 in a particular position and/or orientation for a threshold amount of time, some tool input device of the welding-type tool 199 may instead be activated (while the welding-type tool 199 is in the particular position and/or orientation) to enter the input/identifier associated with the UI panel 222.

In the examples of FIG. 2a, the UI panels 222 are shown spaced a substantial distance away from where the workpiece 175 is held by the workpiece holder 204. In some examples, the significant distance from the UI panels 222 to the workpiece 175 makes it unlikely that the welding-type tool 199 will be accidentally and/or inadvertently positioned proximate (and/or oriented towards) the UI panels 222 long enough to be regarded as input. Thus, it is unlikely that unintentional and/or accidental inputs will be entered using the UI panels 222. In some examples, some or all of the UI panels 222 are comprised of an electrically insulating material, and/or attached to the workpiece holder 204 through an electrically insulating material, so that there is reduced, minimal, and/or no chance that an arc and/or welding-type operation is induced when positioning the welding-type tool proximate the UI panel(s) 222 and/or providing the tool input.

In some examples, the portable technique monitoring system 200 tracks the position(s) and/or orientation(s) of the welding-type tool 199 using one or more tool tracking sensors 252. In the example of FIG. 2a, some of the tool tracking sensors 252 are shown as part of a mobile device 250 of the portable technique monitoring system 200, while other tool tracking sensors 252 are shown as separate from the mobile device 250 and connected to the mobile device 250 through mobile device communication circuitry 257 (e.g., a universal serial bus (USB) interface).

In some examples, the tracking sensor(s) 252 comprise one or more camera sensors (e.g., infrared cameras, visible spectrum cameras, high dynamic range cameras, etc.), acoustic sensors, optical sensors, radio frequency (RF) sensors, ultrasonic sensors, magnetic sensors, acceleration sensors, gyroscopic sensors, and/other appropriate sensors. In some examples, the sensor data captured by the tracking sensor(s) 252 may comprise one or more images, videos, sounds, temperatures, radio waves, heat waves, radiation measurements, and/or other appropriate data. In some examples, sensor data captured by the tracking sensor(s) 252 may allow the portable technique monitoring system 200 to track, detect, and/or record positions, orientations, and/or movement of the welding-type tool 199, workpiece 175, and/or other objects in the welding environment.

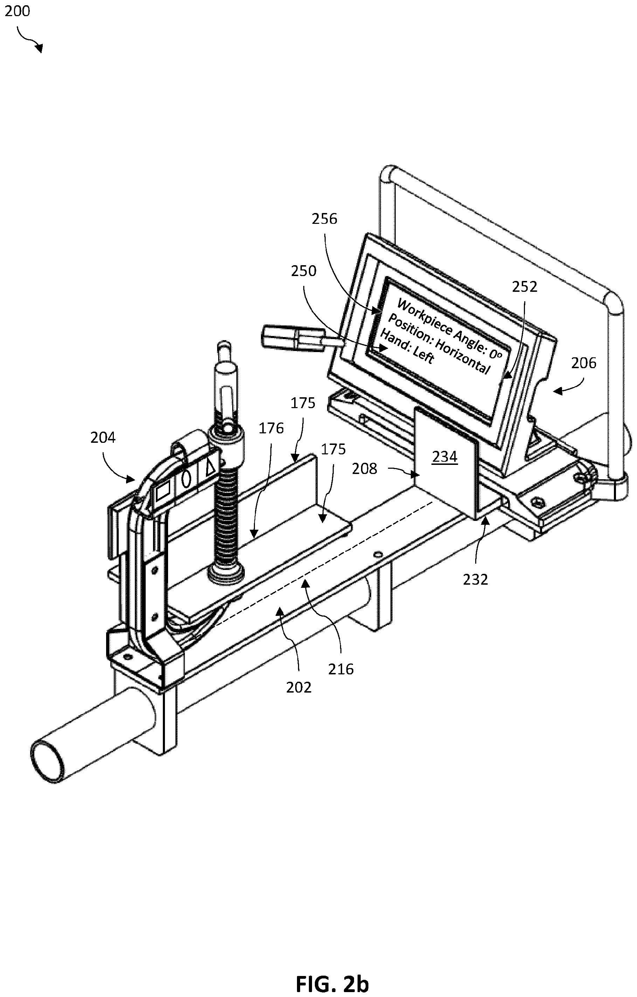

In the examples of FIG. 2b the mobile device 250 having the tool tracking sensor(s) 252 is held and/or housed in the mobile device holder 206 of the portable technique monitoring system 200. In some examples, the mobile device holder 206 is comprised of an electrically insulating material (e.g., plastic, rubber, etc.). In some examples, the electrically insulating material minimizes the chance that the mobile device holder 206 will conduct a (e.g., potentially damaging) electrical current and/or voltage from the welding-type tool 199 and/or welding-type equipment 150 to the mobile device 250.

In the examples of FIG. 2a, the mobile device holder 206 includes a mobile device housing 224 and a mobile device stand 226. As shown, the mobile device housing 224 is approximately rectangular. In some examples, the mobile device holder 206 is shaped to fit and/or accommodate the mobile device 250 within the mobile device housing 224.

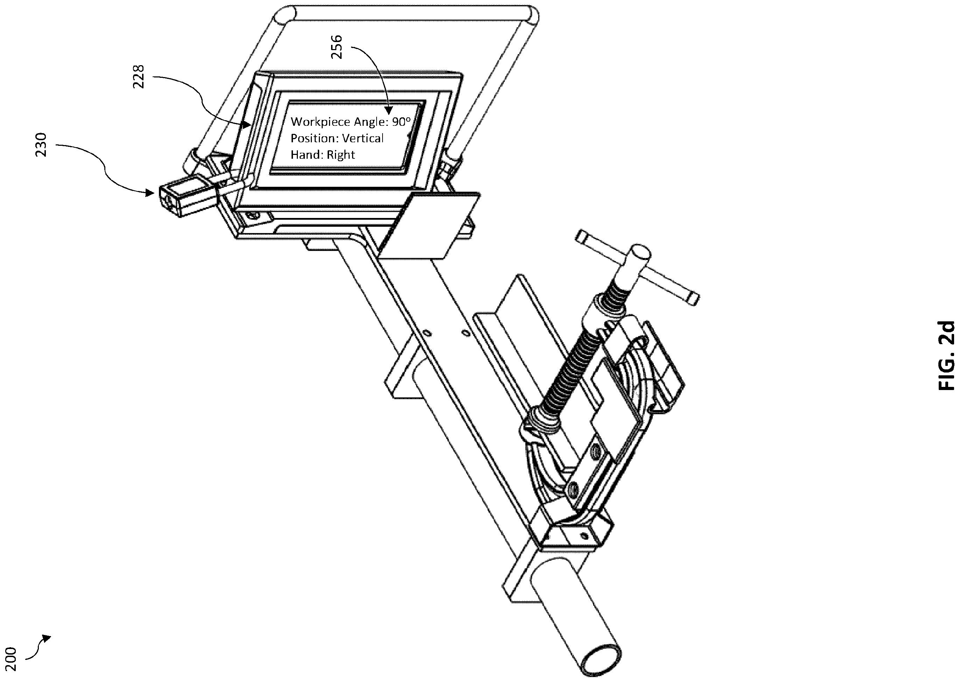

In some examples, the mobile device housing 224 includes ribs, nubs, and/or other structures within the mobile device housing 224 help to hold the mobile device 250 snugly within the mobile device housing 224, such that movement of the mobile device 250 relative to the mobile device housing 224 is minimized. In some examples, the mobile device 250 is inserted into the mobile device housing 224 via a mobile device housing opening 228 at one end of the mobile device housing 224 (see, e.g., FIG. 2d). As shown, a lock 230 can also be connected to the mobile device housing 224 through the mobile device housing opening 228 to ensure the mobile device 250 remains within the mobile device housing 224.

In the examples of FIG. 2a the mobile device housing 224 is supported by the mobile device stand 226. As shown, the mobile device housing 224 (and/or mobile device holder 206) is attached to the support platform 202 using and/or through the mobile device stand 226. The mobile device stand 226 also spaces the mobile device housing 224 away from the support platform 202.When connected to the support platform 202 via the mobile device stand 226, the mobile device holder 206 (and/or the mobile device 250 held by the mobile device holder 206) moves with the support platform 202 (and/or the positioning stand support arm 112).

The mobile device holder 206 is shown as being configured, shaped, and/or positioned such that at least one tracking sensor 252 of the mobile device 250 is centrally positioned with respect to the support platform 202 when the mobile device 250 is fully housed within the mobile device housing 224 (e.g., when the mobile device 250 can be moved no further into the mobile device housing 224 in the direction of the arrow 201 without breaking the mobile device housing 224 and/or mobile device 250). That is, the at least one tracking sensor 252 is approximately aligned with the center longitudinal platform axis 216 of the support platform 202 when the mobile device 250 is fully housed within the mobile device housing 224.

As both the clamp pad 212 of the workpiece holder 204 and the tracking sensor(s) 252 of the mobile device 250 are centrally aligned with the central platform axis 216 of the support platform 202, the workpiece holder 204 will hold the workpiece 175 centrally within a field of view of the tracking sensor(s) 252. The mobile device holder 206 is further shown as being configured, shaped, and/or positioned such that the at least one tracking sensor 252 is spaced from (e.g., above) the support platform 202 at approximately the same height/distance as the clamp pad 212 of the workpiece holder 204. In some examples, this positional alignment may help to ensure that the workpiece 175 and/or the welding-type tool 199 is within the field of view of the tracking sensor(s) 252 when the welding-type tool 199 is performing a welding-type operation on/at the workpiece 175. In some examples, the configuration(s), shape(s), and/or position of the mobile device holder 206, mobile device 250, and/or tracking sensor 252 contributes to the ability of the portable technique monitoring system 200 to efficiently and/or effectively track the position(s) and/or orientation(s) of the welding-type tool 199 and/or workpiece 175.

In the examples of FIG. 2a, the mobile device housing 224 is tilted with respect to the mobile device stand 226 and/or support platform 202. In some examples, the tilt of the mobile device housing 224 (and/or tilt of the mobile device 250) helps to prevent (e.g., arc) light produced by the welding-type operation from directly impinging upon the tracking sensor 252 and causing lens flare. In some examples, the light blocker 208 of the portable technique monitoring system 200 cooperates with the tilt of the mobile device housing 224 (and/or tilt of the mobile device 250) to prevent (e.g., arc) light produced by the welding-type operation from directly impinging upon the tracking sensor 252 and causing lens flare.

In the examples of FIG. 2a, the light blocker 208 is shown attached to the support platform 202 between the mobile device holder 206 and the workpiece holder 204. The shaping and/or positioning of the light blocker 208 is such that, when (e.g., arc, spark) light is produced proximate a workpiece joint 176 of the workpiece(s) 175 (see, e.g., FIG. 2b), light that would've otherwise been directly visible to and/or directly detected by the tracking sensor(s) 252 is instead blocked from direct view by the light blocker 208.

The light blocker 208 is shown as comprising a light blocker base 232 and a light blocker wall 234. The light blocker base 232 is shown as abutting the support platform 202 and extending approximately parallel to the surface of the support platform 202. The light blocker base 232 is further shown as extending into a gap between the surface of the support platform 202 and the mobile device stand 226. In some examples, the light blocker 208 is held in place by frictional forces due to the tight fit of the light blocker base 232 between the surface of the support platform 202 and the mobile device stand 226. In some examples the light blocker base 232 is additionally, or alternatively, fastened to the support platform 202 and/or the mobile device stand 226 (e.g., via one or more fasteners).

In the examples of FIG. 2a, the light blocker wall 234 is connected to and/or integral with the light blocker base 232. As shown, the light blocker wall 234 extends approximately perpendicularly away from both the light blocker base 232 and the support platform 202. In some examples, the light blocker 208 is comprised of an opaque material that is impenetrable to light.

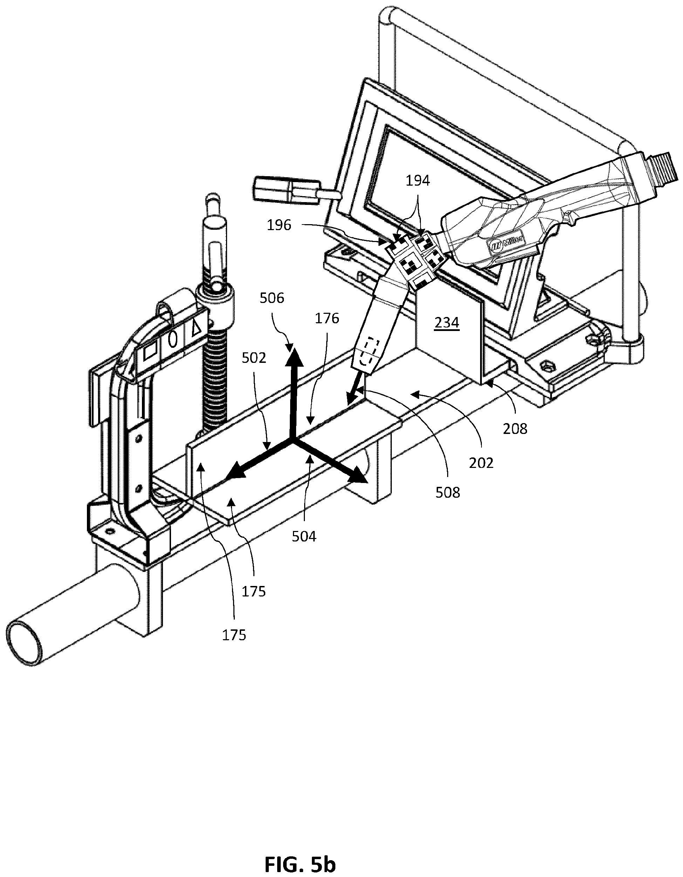

In some examples, the light blocker wall 234 is configured, shaped, and/or positioned to block (e.g., arc, spark, etc.) light produced by the welding-type operation(s) from directly impinging upon the tracking sensor(s) 252 and/or causing lens flare. In some examples, the light blocker wall 234 is nevertheless configured, shaped, and/or positioned to still allow the marker(s) 194 on the marker attachment 196 to be visible to (and/or within the field of view of) the tracking sensor(s) 252 during the welding-type operation(s) (see, e.g., FIG. 5b). The ability to prevent lens flare without blocking the tracking sensor(s) 252 enables tracking sensor data captured by the tracking sensor(s) 252 to be used to track the position(s)/orientation(s) of the welding-type tool 199.

In some examples, proper positioning and/or orientation of the workpiece 175 may also help to reduce/prevent lens flare and/or enable tracking. For example, the workpiece 175 may be positioned and/or oriented such that an operator points the tip/nozzle end of the welding-type tool 199 at least somewhat away from the mobile device 250 (and/or tracking sensor(s) 252) during the welding-type operation.

In some examples, positioning and/or orienting the workpiece 175 such that the tip/nozzle end of the welding-type tool 199 is pointed at least somewhat away from the mobile device 250 (and/or tracking sensor(s) 252) during the welding-type operation helps to ensure the welding-type tool 199 is positioned between the tracking sensor(s) 252 and most of the (e.g., arc, spark, etc.) light produced from the welding-type operation. When so positioned, most of the (e.g., arc, spark, etc.) light produced from the welding-type operation is obscured by the welding-type tool 199. Were the welding-type tool 199 not so positioned, the (e.g., arc, spark, etc.) light might interfere with effective sensor data collection by the tracking sensor(s) 252, and thereby interfere with effective object tracking.

In some examples, proper positioning of the welding-type tool 199 depends upon proper positioning and/or orientation of the workpiece(s) 175 and/or workpiece joint 176. In some examples, proper positioning and/or orientation of the workpiece(s) 175 and/or workpiece joint 176 depends upon the dominant hand of the operator (and/or the hand by which the operator holds and/or manipulates the welding-type tool 199).

For example, left handed operators are most comfortable holding the welding-type tool 199 in their left hand, and pointing the welding-type tool 199 to their right. Thus, to ensure the tip/nozzle end of the welding-type tool 199 is pointed at least somewhat away from the mobile device 250 (and/or tracking sensor(s) 252) during the welding-type operation, the mobile device 250 should be positioned to the left of the operator during the welding-type operation. Positioning the mobile device 250 to the left of the left handed operator ensures that the operator points the welding-type tool 199 away from the mobile device 250 (and/or tracking sensor(s) 252) when the operator points the welding-type tool 199 from left to right.

As another example, right handed operators are most comfortable holding the welding-type tool 199 in their right hand, and pointing the welding-type tool 199 to their left. Thus, to ensure the tip/nozzle end of the welding-type tool 199 is pointed at least somewhat away from the mobile device 250 (and/or tracking sensor(s) 252) during the welding-type operation, the mobile device 250 should be positioned to the right of the operator during the welding-type operation. Positioning the mobile device 250 to the right of the right handed operator ensures that the operator points the welding-type tool 199 away from the mobile device 250 when the operator points the welding-type tool 199 from right to left.

In some examples, the workpiece holder 204 and/or positioning stand 102 may be used to properly position and/or orient the workpiece 175 and/or workpiece joint 176. For example, the operator may have to be positioned on a particular side of the portable technique monitoring system 200 to ensure the operator will move the welding-type tool 199 away from the mobile device 250 (and/or tracking sensor(s) 252) during the welding-type operation. In such an example, the workpiece holder 204 can be configured to hold the workpiece(s) 175 on a side of the workpiece joint 176 opposite to where the operator will be positioned (e.g., to avoid obstructing and/or impeding the operator during the welding-type operation).

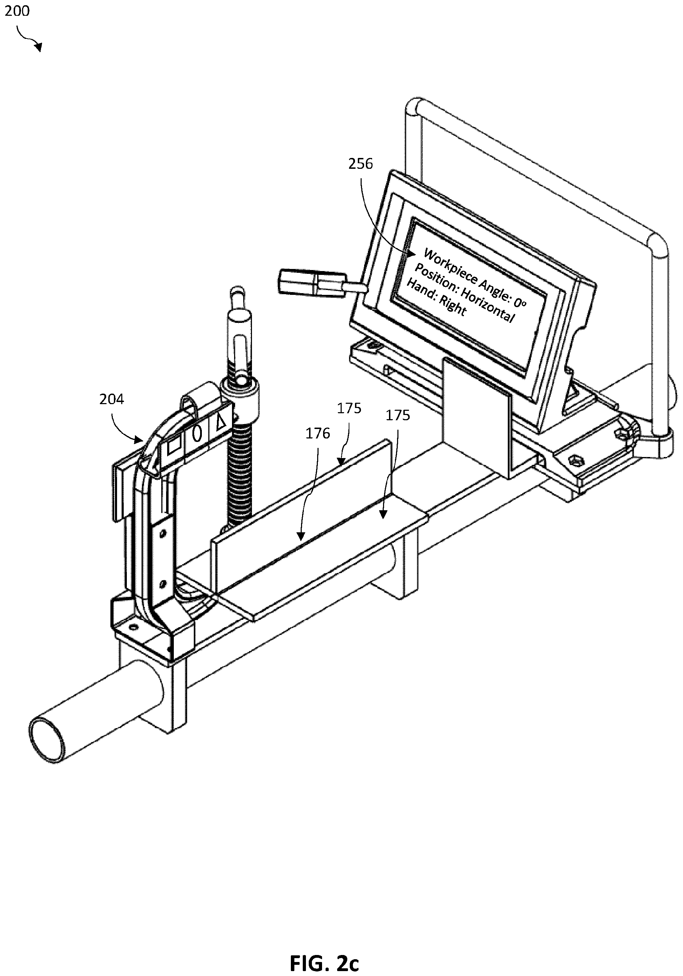

In the examples of FIGS. 2b-2c, the workpiece holder 204 is shown as holding (and/or clamping) the workpiece(s) 175 on different sides of the workpiece joint 176, to accommodate left handed and right handed operators. In particular, in the example of FIG. 2b, the workpiece holder 204 is shown as holding (and/or clamping) the workpiece(s) 175 on a side of the workpiece joint 176 that will allow a left handed operator to point the welding-type tool 199 away from the mobile device 250 (e.g., from left to right) without obstruction. In the example of FIG. 2c, the workpiece holder 204 is shown as holding (and/or clamping) the workpiece(s) 175 on a side of the workpiece joint 176 that will allow a right handed operator to point the welding-type tool 199 away from the mobile device 250 (e.g., from right to left), without obstruction. While only tee joints 176 are shown in the figures for the sake of brevity, in some examples, the portable technique monitoring system 200 can work with several varieties of common workpiece joints 276 (e.g., butt, lap, tee, corner, edge, etc.).

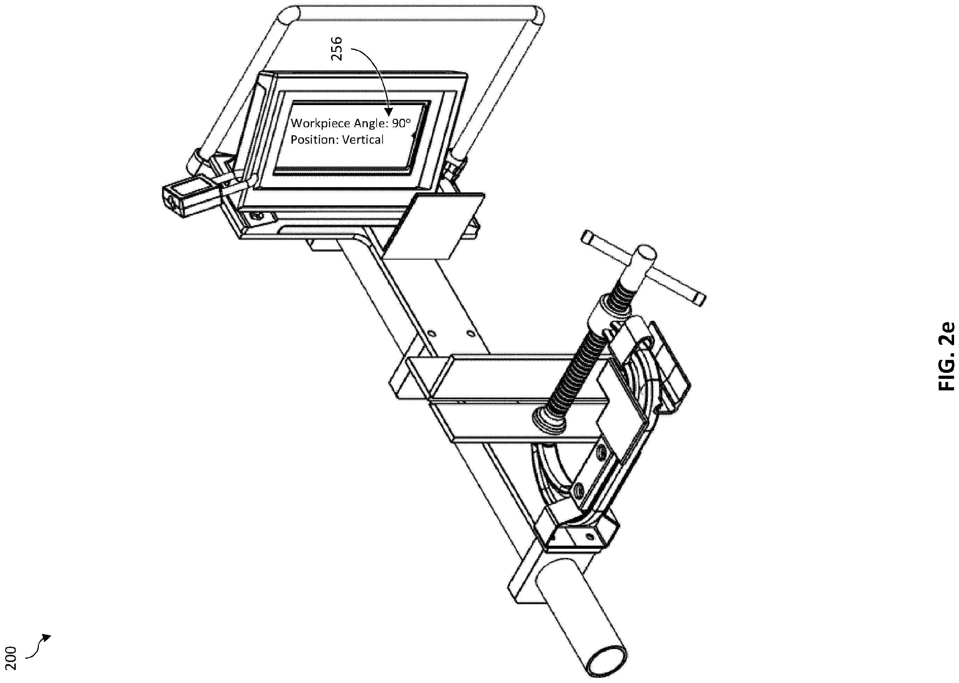

In some examples, there is no way to hold the workpiece(s) 175 such that the welding-type tool 199 will point and/or move away from the mobile device 250 (and/or tracking sensor(s) 252) during a welding-type operation. FIGS. 1e and 2e, for example, show the workpiece joint 176 (and/or workpiece(s) 175) oriented vertically. In such an orientation, the welding-type tool 199 will point and/or move parallel to (rather than toward or away from) the mobile device 250 (and/or tracking sensor(s) 252) during the welding-type operation(s). In such examples, the portable technique monitoring system 200 may attempt to use tracking sensor (e.g., camera) data that has less light interference for tracking in areas with less light interference, and interpolate in areas with more light interference.

While direct impingement of welding-type operation light on the tracking sensor(s) 252 can cause lens flare, in some examples, the tracking sensor(s) 252 may be able to handle indirect light with no issues. Thus, in some examples, the tracking sensor(s) 252 may observe and/or detect the (e.g., arc, spark, etc.) light from a welding-type operation indirectly by observing and/or detecting the illumination and/or brightness of the surrounding environment.

In some examples, the tracking sensor(s) 252 may capture tracking sensor data relating to the surrounding environment, and the mobile device 250 may analyze characteristics and/or properties of the sensor data to determine whether a welding-type operation is taking place. For example, the mobile device 250 may determine a welding-type operation is occurring (and/or has started) when the tracking sensor data indicates the (e.g., average, mode, medium, etc.) brightness of the environment has increased beyond a threshold, and/or that the brightness has increased at a rate that exceeds a threshold rate. As another example, the portable technique monitoring system 200 may determine a welding-type operation is not occurring (and/or has stopped) when the sensor data indicates the brightness of the environment has decreased below a threshold, and/or that the brightness has decreased at a rate that exceeds a threshold rate (e.g., in terms of absolute value of the rate(s)).

In some examples where the captured tracking sensor data is representative of a captured image, the mobile device 250 may analyze characteristics and/or properties of the image to determine whether a welding-type operation is taking place. In particular, the mobile device 250 may analyze certain values of one or more Red Blue Green (RGB) color model representations to determine whether a welding-type operation is taking place. For example, the RGB color values in a hue, saturation, value (HSV), and/or hue, saturation, level (HSL), color model representation may be analyzed to determine whether a welding-type operation is taking place.

In such examples, a welding-type operation may be determined to have begun or ceased when there is an upward or downward spike (e.g., over a threshold slope/rate) of the (e.g., average, mode, medium, etc.) hue, saturation, and/or value/level in the captured image. While the value and/or level might seem to be the best indicator of a welding-type operation (as value/level are generally seen as synonymous with brightness), empirical evidence seems to indicate that changes in hue might be better used as an indicator of whether a welding-type operation has started/stopped.

In particular, the hue has been observed to dramatically spike up or down when a welding-type operation begins or ends, and otherwise stay approximately constant. Though saturation and value/level quantities also spike at the beginning and/or end of a welding-type operation, their steady state quantities after the spike have been observed to fluctuate far more than hue. Because the rate of change (and/or slope) of the (e.g., average, mode, medium, etc.) hue is approximately zero except when a welding-type operation begins or ends (unlike saturation and/or value/level), it may be easier to use hue as an indicator of welding-type operation than saturation and/or value/level.

In some examples where the tracking sensor 252 is a camera and/or optical sensor, camera/sensor exposure values may also be used to determine whether a welding-type operation is occurring. In some examples, camera/sensor exposure refers to how long a camera/sensor receives light before capturing (e.g., image) data. In some cameras and/or image sensors the exposure time is automatically set and/or adjusted to keep the average brightness and/or intensity of each image approximately the same. Thus, if there is suddenly a bright light (e.g., as might occur when a welding-type operation begins), the exposure time may be automatically (and/or drastically) decreased (e.g., at more than a threshold rate). And if the light suddenly disappears (e.g., as might occur when a welding-type operation ends), the exposure time may be automatically (and/or drastically) increased (e.g., at more than a threshold rate). Thereby, automatic changes in exposure time may be used to determine whether a welding-type operation has started/stopped, and/or is underway.

Using the above methods, the portable technique monitoring system 200 can identify if a welding-type operation is occurring even when (e.g., arc) light produced by the welding-type operation(s) is prevented from directly impinging upon the tracking sensor(s) 252 (e.g., via the light blocker 208 and/or tilt of the mobile device 250).

In the example of FIG. 2a, the mobile device 250 is shown as including both the tracking sensor(s) 252 and one or more orientation sensors 254. In some examples, the one or more orientation sensors 254 comprise one or more inertial measurement units (IMUs). In some examples, each IMU comprises one or more accelerometers, gyroscopes, and/or magnetometers.

In some examples, one or more of the orientation sensors 254 (and/or IMU sensors) are configured to capture and/or output orientation sensor data representative and/or indicative of an acceleration (e.g., due to gravity) experienced by the orientation sensor(s) 254. In some examples, the experienced acceleration includes a direction of acceleration, and therefore a direction of acceleration may be determined from the orientation sensor data.

In some examples, a first direction of acceleration may be determined and saved as a reference (e.g., when an orientation sensor 254 is turned on, initialized, calibrated, etc.). Subsequent future acceleration directions may be compared with the reference direction to determine an orientation of the orientation sensor(s) 254 (and/or of the mobile device 250 comprising the orientation sensor(s) 254). In some examples, the orientation may be determined based on an (e.g., angular) difference between the previously recorded reference direction and the subsequent direction(s).

Because the mobile device 250 (having the orientation sensor(s) 254) is connected with the support platform 202 (e.g., through the mobile device holder 206), and the workpiece 175 is also connected with the same support platform 202 (e.g., through the workpiece holder 204), the orientation of both the workpiece 175 and the mobile device 250 will change in the same way. Thus, the orientation determined from the orientation sensor data captured by the orientation sensor(s) 254 of the mobile device 250 can be used to determine the orientation of the workpiece(s) 175 and/or workpiece joint 176 (at least relative to one axis of rotation, such as, for example, the support arm axis 118).

FIGS. 2b-2e show examples of a display screen 256 of the mobile device 250 displaying the orientation angle of the workpiece(s) 175, as determined via the orientation sensor data. In FIGS. 2b-2c, the orientation angle of the workpiece(s) 175 is shown as being 0 degrees. In such examples, the reference acceleration direction previously detected by the orientation sensor(s) 254 and the current acceleration direction currently detected by the orientation sensor(s) 254 are the same direction (and/or in parallel). Thus, the angle between the two is zero degrees. As the angle between the reference direction and current direction is zero degrees, the workpiece orientation angle is zero degrees, as shown on the mobile device display screen 256.

In FIG. 2d, however, the orientation of the workpiece(s) 175 and the mobile device 250 has changed. As shown, the positioning stand support arm 112 has been rotated/spun ninety degrees to put the workpiece joint 176 in an overhead position (see also FIG. 1d). Thus, the mobile device 250 and workpiece 175 have also been rotated ninety degrees (e.g., due to their attachment to the positioning stand support arm 112 via the mobile device holder 206, workpiece holder 204, support platform 202, and support connectors 122). In such an example, the angle between the reference acceleration direction previously detected by the orientation sensor(s) 254 and the current acceleration direction (e.g., due to gravity) is ninety degrees. The mobile device display screen 256 thereby shows that the orientation angle of the workpiece 175 is ninety degrees.

In the example of FIG. 2a, the mobile device 250 is shown as including the tracking sensor(s) 252, the orientation sensor(s) 254, mobile device communication circuitry 257, memory circuitry 258, processing circuitry 260, and UI circuitry 262 connected via a common bus. The mobile device 250 is further shown as including a casing 268 enclosing (and/or encasing, housing, etc.) the tracking sensor(s) 252, the orientation sensor(s) 254, memory circuitry 258, processing circuitry 260, and UI circuitry 262). The UI circuitry 262 is further shown (e.g., electrically) connected with UI devices 264 of the mobile device 250.

In some examples, the UI devices 264 of the mobile device 250 include UI input devices configured to receive input from a user to control the mobile device. In some examples, the UI devices 264 of the mobile device include UI output devices configured to provide output to the user regarding the state, status, and/or operation of the mobile device 250. Examples of input devices include touch screens, keyboards, microphones, buttons, knobs, levers, switches, dials, slides, and/or other input devices. Examples of output devices include display screens, speakers, lights, haptic devices, and/or other output devices. In some examples, the mobile device display screen 256 is one of the UI devices 264 of the mobile device 250.

In some examples, the UI circuitry 262 comprises one or more drivers for the UI devices 264. In some examples, the UI circuitry 262 is configured to generate one or more signals representative of input received via the UI devices 264 and provide the signal(s) to the bus. In some examples, the UI circuitry 262 may also be configured to control the UI device(s) 264 to generate one or more outputs in response to one or more signals (e.g., received via the bus).

In some examples, the mobile device communication circuitry 257 includes one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the mobile device communication circuitry 257 is configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.). In some examples, the mobile device communication circuitry 257 may be coupled to one or more antennas to facilitate wireless communication.

In some examples, the mobile device communication circuitry 257 is configured to facilitate communications of the mobile device 250. In some examples, the mobile device communication circuitry 257 may receive one or more signals (e.g., from the welding-type tool 199, welding-type equipment 150, a calibration tool 700, etc.) decode the signal(s), and provide the decoded data to the electrical bus. As another example, the mobile device communication circuitry 257 may receive one or more signals from the electrical bus (e.g., representative of one or more inputs received via the UI circuitry 262 and/or UI devices 264) encode the signal(s), and transmit the encoded signal(s) to an external device (e.g., the welding-type tool 199, welding-type equipment 150, etc.).

In some examples, the mobile device memory circuitry 258 comprises machine readable instructions. In some examples, the mobile device processing circuitry 260 includes one or more processors, and/or is configured to execute the machine readable instructions stored in the mobile device memory circuitry 258.

In the example of FIG. 2a, the mobile device memory circuitry 258 is shown as comprising and/or storing (e.g., machine readable instructions of) a training process 300. The training process 300 is further shown as comprising and/or storing (e.g., machine readable instructions of) a joint calibration process 600.

In some examples, the memory circuitry 258 may also include (and/or store) one or more determined, target, present, and/or past technique and/or training parameters. In some examples, timestamp information is also stored and/or associated with the (e.g., technique) parameters. In some examples, the parameters may be used and/or updated during the training process 300.

In some examples, the memory circuitry 258 may also include (and/or store) one or more different training exercises. In some examples, each training exercise may specify certain training parameters to use for the exercise, and/or specify certain technique parameters that an operator should target and/or try to achieve during the exercise.

In some examples, technique parameters include work angle, travel angle, travel speed, travel direction, contact tip to work distance, arc length, travel speed, aim, filler rod feed length, filler rod feed rate, and/or weave parameters (e.g., frequency, weave width, dwell time, etc.). In some examples, training parameters include an operator identifier, an operator dominant hand, a training exercise (e.g., identifier), a type of workpiece joint 176 (e.g., butt, lap, tee, corner, edge, etc.), an operation position of the workpiece joint 176 (e.g., flat, horizontal, vertical, overhead, etc.), an orientation of the workpiece(s) 175 and/or workpiece joint 176 (e.g., relative to the z axis and/or y axis), an allowable range or orientations of the workpiece(s) 175 and/or workpiece joint 176 (e.g., relative to the z axis), a material type of the workpiece(s) 175, a thickness of the workpiece 175, a type of wire/filler, a type of welding-type operation (e.g., fillet welding, groove welding, plasma cutting, etc.), a type of welding-type tool 199 (e.g., MIG gun, TIG torch, stick electrode, plasma cutter, etc.), a type of marker attachment 196 and/or marker(s) 194, equipment parameters of the welding-type equipment (e.g., target voltage, target current, target wire feed speed, target gas flow rate, target welding-type process, etc.), and/or other information relevant to the training process 300.

In some examples, the memory circuitry 258 also includes (and/or stores) several different (e.g., rigid body) models of different welding-type tools 199, markers 194, marker attachments 196, and/or types of workpieces 175. In some examples, one or more of the models may include and/or indicate dimension information. In some examples, the model(s) may be used when identifying and/or tracking position(s) and/or orientation(s) of the welding-type tool 199, and/or workpiece 175 during the training process 300.

In some examples, during the training process 300, the portable technique monitoring system 200 verifies the workpiece 175 is in the correct orientation for a particular training exercise (and/or selects a training exercise based on the orientation of the workpiece 175). In some examples, during the training process 300, the portable technique monitoring system 200 additionally, or alternatively, calibrates and/or identifies the position(s) and/or orientation(s) of the workpiece joint 176 (e.g., via the joint calibration process 600). In some examples, during the training process 300, the portable technique monitoring system 200 tracks and/or monitors the position(s) and/or orientation(s) of the welding-type tool 199 relative to the position(s) and/or orientation(s) of the workpiece 175 and determines several technique parameters based on the relative position(s) and/or orientation(s).

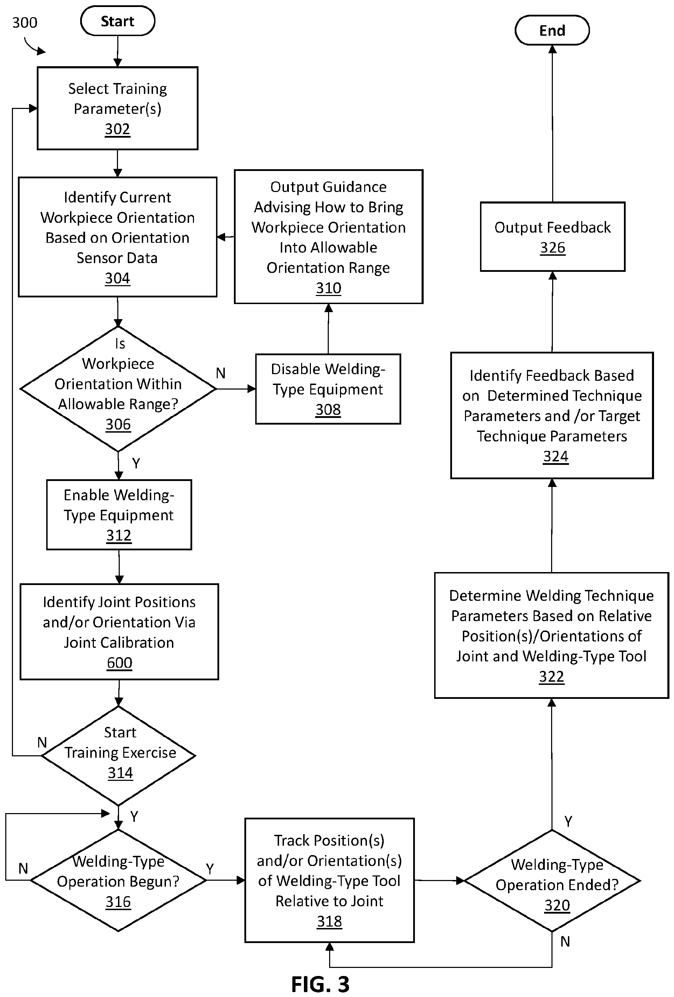

FIG. 3 is a flowchart illustrating operation of an example training process 300. While the training process 300 may sometimes described below as conducting certain actions for the sake of understanding, it should be understood that one or more of the above described components (e.g., of the welding-type power supply 152) may undertake the actions on behalf of (and/or according to) the training process 300.

In the example of FIG. 3, the training process 300 begins at block 302, where the mobile device processing circuitry 260 selects one or more training parameters. While block 302 is shown as taking place at the beginning of the training process 300, in some examples, some or all of block 302 may occur later in the training process 300.

In some examples, at block 302, the mobile device processing circuitry 260 selects one or more of the training parameters based on input received from an operator (e.g., via the UI devices 264 of the mobile device 250 and/or the operator interface 164). For example, an operator might login using operator credentials, and the mobile device processing circuitry 260 might select an operator identifier that corresponds to the operator credentials. As another example, the operator might input their dominant hand, the desired training exercise, the type of welding-type tool 199 being used, one or more equipment parameters, and/or other parameters. As another example, the operator might enter equipment parameters via the operator interface 164 of the welding-type equipment 150 (and/or the equipment parameters may be communicated to the mobile device 250 via mobile device communication circuitry 257 and/or equipment communication circuitry 158).

In some examples, at block 302, the mobile device processing circuitry 260 selects one or more of the training parameters based on one or more other selected training parameters. For example, the mobile device processing circuitry 260 might select the operator dominant hand based on a selected operator identifier (e.g., selected based on input credentials). As another example, the mobile device processing circuitry 260 might select a position of the workpiece joint 176 based on an orientation of the workpiece(s) 175 (and/or a type of workpiece joint 176). As another example, the mobile device processing circuitry 260 might select a type of training exercise based on one or more other selected training parameters (e.g., a selected orientation of the workpiece(s) 175, position of the workpiece joint 176, type of workpiece joint 176, type of welding-type tool 199, type of welding-type operation, allowable range of orientations of the workpiece(s) 175, etc.). As another example, the mobile device processing circuitry 260 might select the one or more other selected training parameters based on a selected training exercise (and/or one or more other selected training parameters).

In some examples, at block 302, the mobile device processing circuitry 260 selects one or more training parameters based on tracking sensor data captured by the tracking sensor(s) 252. For example, the tracking sensor(s) 252 may capture tracking sensor (e.g., image) data related to the workpiece(s) 175 and use the captured data (e.g., in conjunction with one or more stored models of workpieces 175) to identify/select one or more training parameters related to the workpiece 175 (e.g., type of workpiece joint 176, material type of the workpiece(s) 175, etc.). As another example, the tracking sensor(s) 252 may capture tracking sensor (e.g., image) data related to the welding-type tool 199 (and/or marker attachment 196) and identify/select the type of welding-type tool 199 being used based on the captured tracking sensor data and/or one or more stored models of different welding-type tools 199 (and/or marker attachments 196 for different welding-type tools 199).

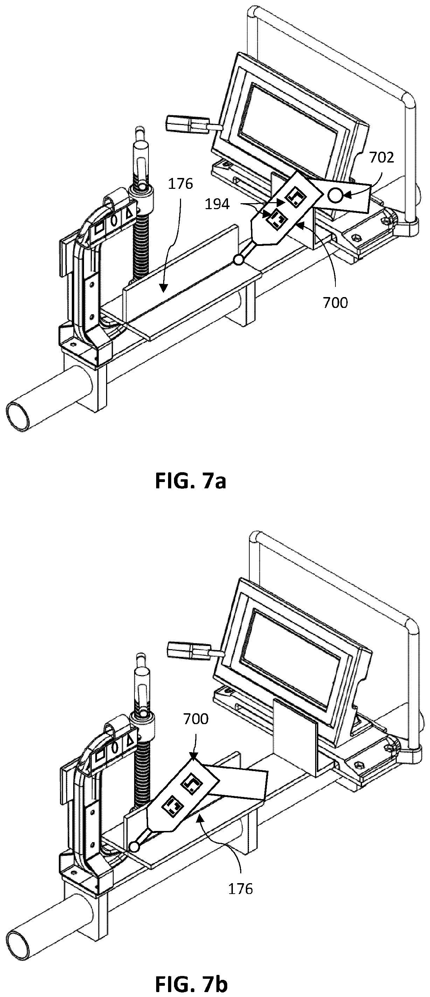

In some examples, the processing circuitry 260 determines an operator is providing an input associated with a UI panel 222, and selects one or more training parameters based on the input. For example, the tracking sensor(s) 252 may capture tracking sensor data related to the welding-type tool 199 (and/or marker attachment 196) and/or calibration tool 700 (see, e.g., FIG. 7), and the mobile device processing circuitry 260 may identify a position and/or orientation of the (e.g., tip/nozzle end of the) welding-type tool 199 and/or calibration tool 700 as positioned proximate and/or oriented towards a particular UI panel 222 (e.g., based on the tracking sensor data and/or one or more models of the welding-type tool 199 and/or marker attachment 196). In such an example, if and/or when the (e.g., tip/nozzle end of the) welding-type tool 199 (and/or calibration tool 700) is oriented towards and/or positioned within some threshold distance of the UI panel 222 for a threshold amount of time (and/or when some tool input is received), the mobile device processing circuitry 260 may determine the operator is providing an input associated with the UI panel 222.

In some examples, the mobile device memory circuitry 258 stores an association between each UI panel 222 and one or more inputs associated with that UI panel 222. In some examples, the mobile device memory circuitry 258 further stores an association between each UI panel 222 and a position and/or orientation of the UI panel 222 (e.g., hard coded or identified via some calibration process). In some examples, the input associated with a particular UI panel 222 is also associated with a particular training parameter selection, such that the operator can select the particular training parameter by positioning the welding-type tool 199 (and/or calibration tool 700) proximate, and/or orienting the welding-type tool 199 (and/or calibration tool 700) towards, the UI panel 222.

In some examples, the use of the welding-type tool 199 and/or UI panel 222 may be useful when a mobile device cover is used to cover the mobile device display screen 256. In some examples, such a cover may protect the mobile device display screen 256 from spatter, sparks, and/or debris, but may also render the mobile device display screen 256 unable to detect touch input. With the touchscreen functionalities of the mobile device 250 impaired due to a protective mobile device display cover, the UI panels 222 can serve as a viable alternative for operator input.

FIG. 5a shows an example of the welding-type tool 199 positioned proximate a UI panel 222, and oriented towards the UI panel 222. In some examples, if the welding-type tool 199 is held in this position and/or orientation for a threshold amount of time (and/or provides a tool input), the mobile device processing circuitry 260 may interpret this action as providing an input associated with the UI panel 222 having a circle inscribed upon it.

In the example of FIG. 3, after block 302, the training process 300 proceeds to block 304, where the mobile device processing circuitry 260 identifies the (e.g., angular) orientation of the workpiece 175 (e.g., with respect to the arm axis 118). For example, the orientation sensor(s) 254 may capture (e.g., IMU) orientation sensor data, and the mobile device processing circuitry 260 may determine an (e.g., angular) orientation of the mobile device 250 based on the captured orientation data. Because the mobile device 250 and workpiece 175 share a similar orientation (as discussed above), the mobile device processing circuitry 260 may determine the orientation of the workpiece 175 to be similar to the orientation of the mobile device 250.

In some examples, the mobile device processing circuitry 260 takes into account a constant angular offset between the orientation of the mobile device 250 and the orientation of the workpiece 175 (e.g., due to the tilt of the mobile device housing 224) when determining the workpiece orientation. In some examples, the constant angular offset is hard coded in the mobile device memory circuitry 258. In some examples, the constant angular offset is identified via a one time calibration process and thereafter stored in the mobile device memory circuitry 258.

In some examples, the mobile device processing circuitry 260 also outputs the orientation of the workpiece 175 at block 304 (e.g., via the UI devices 264 of the mobile device 250). In some examples, the mobile device processing circuitry 260 may also select and/or determine one or more other training parameters based on orientation sensor data captured by the orientation sensor(s) 254 as well.

After block 304, the training process 300 is shown as proceeding to block 406, where the mobile device processing circuitry 260 determines whether the orientation of the workpiece 175 identified at block 304 is within an allowable range of orientations (e.g., selected at block 302). In some examples, block 306 may be skipped. For example, if the allowable range of orientations is determined based on the training exercise, and the training exercise is determined based on the detected orientation of the workpiece 175, there may be no need to check to make sure the detected orientation of the workpiece 175 is within the allowable range of orientations (though it may not hurt either).

In some examples, at block 306, the mobile device processing circuitry 260 additionally, or alternatively, determines whether one or more additional, or alternative, training parameters identified at block 302 match what is expected (e.g., given one or more of the other training parameters identified at block 302). For example, the mobile device processing circuitry 260 might determine whether the type of welding-type tool 199 identified from tracking sensor data (and/or operator input) matches the type of welding-type tool 199 called for by a selected training exercise (and/or a selected/detected type of workpiece joint 176, selected/detected type of welding-type operation, selected equipment parameter(s), etc.).

In the example of FIG. 3, if the detected orientation of the workpiece 175 is not within the allowable range of orientations (and/or one or more other training parameters are not in line with what is expected), the training process 300 proceeds to block 308, where the mobile device processing circuitry 260 disables the welding-type equipment 150. In some examples, disabling the welding-type equipment 150 ensures that a welding-type operation cannot take place while the workpiece 175 is at the wrong orientation.

In some examples, the mobile device processing circuitry 260 disable the welding-type equipment 150 (e.g., welding-type power supply 152) at block 308 by sending one or more disable command signals to the welding-type power supply 152 (e.g., through the mobile device communication circuitry 257 and/or equipment communication circuitry 158). In some examples, the control circuitry 160 of the welding-type power supply 152 disables the power conversion circuitry 162, wire feeder 154 (e.g., via the feeder rollers), and/or gas supply 156 (e.g., via a gas supply valve) using one or more control signals in response to receiving the disable signal(s) from the mobile device 250.

In the example of FIG. 3, if the orientation of the workpiece 175 is outside the allowable range of orientations, after disabling the welding-type equipment 150 at block 308, the mobile device processing circuitry 260 outputs guidance as to how to bring the workpiece 175 within the allowable range of orientations at block 310. For example, the mobile device processing circuitry 260 might output written, audio, and/or visual instructions and/or recommendations as to how to adjust the positioning stand 102 to bring the orientation of the workpiece 175 within the allowable range of orientations.

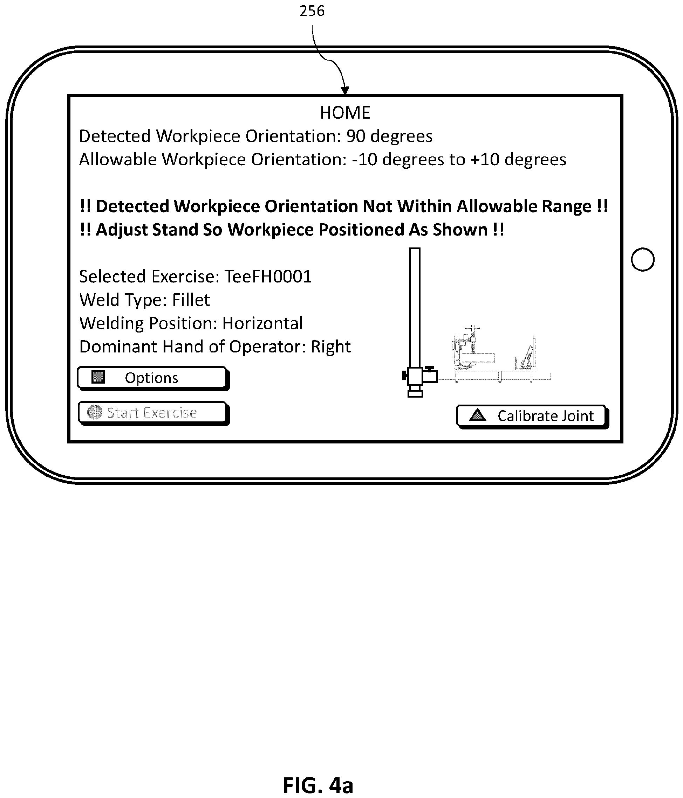

FIG. 4a shows an example of what might be output at block 310 of the training process 300 if the orientation of the workpiece 175 is outside the allowable range of orientations. In the example of FIG. 4a, the mobile device display screen 256 is depicted as displaying the detected orientation of the workpiece 175 (e.g., relative to the arm axis 118) and the allowable range of orientations of the workpiece 175 (e.g., relative to the arm axis 118).

As the detected orientation of the workpiece 175 (i.e., 90 degrees) is outside of the allowable range of workpiece orientations (i.e., -10 degrees to +10 degrees), the mobile device display screen 256 is depicted as displaying a notification that the detected orientation is not within the allowable range. The mobile device display screen 256 is also depicted as displaying guidance as to how to fix the orientation issue. In particular, the mobile device display screen 256 is depicted as displaying guidance in the form of instructional text, and a graphic showing how to adjust the positioning stand so that the orientation of the workpiece 175 is within the allowable range.

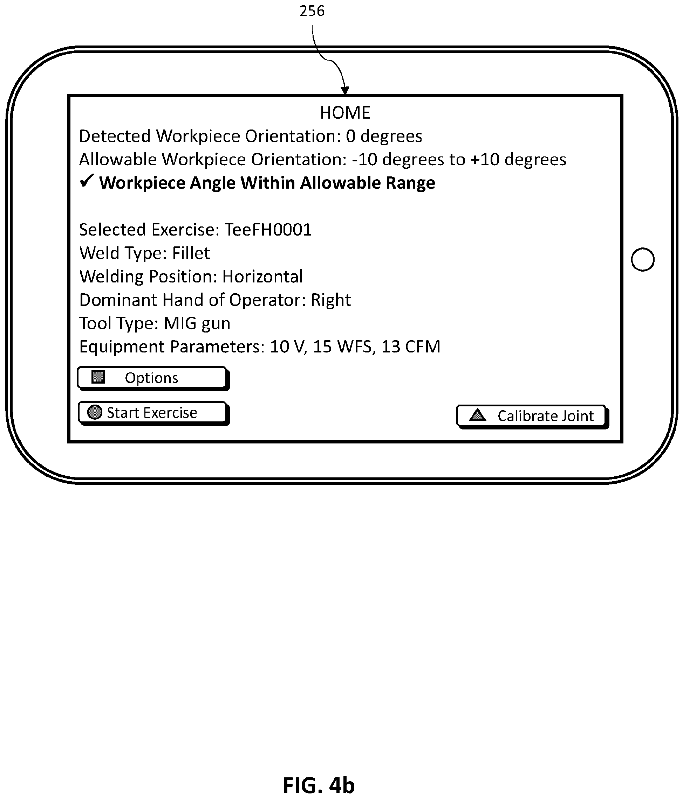

FIG. 4b shows an example of what might be output at block 306 (and/or 312) of the training process 300 if the orientation of the workpiece 175 is within (or brought within) the allowable range of orientations. As shown, the detected orientation of the workpiece 175 (i.e., 0 degrees) is now within the allowable range of workpiece orientations (i.e., -10 degrees to +10 degrees). A notification is further shown indicating that the orientation of the workpiece 175 is within the allowable orientation range. Additional equipment parameters are also displayed (e.g., indicating that the welding-type equipment 150 is no longer disabled).

In the example of FIG. 3, the training process 300 proceeds to block 312 if the orientation of the workpiece 175 is within (or brought within) the allowable range of orientations. At block 312, the mobile device processing circuitry 260 enables the welding-type equipment 150 so that a welding-type operation can once again take place (e.g., in case the welding-type equipment 150 was previously disabled at block 308).

In some examples, the mobile device processing circuitry 260 enables the welding-type equipment 150 (e.g., welding-type power supply 152) at block 312 by sending one or more enable command signals to the welding-type power supply 152 (e.g., through the mobile device communication circuitry 257 and/or equipment communication circuitry 158). In some examples, the control circuitry 160 of the welding-type power supply 152 enables the power conversion circuitry 162, wire feeder 154 (e.g., via the feeder rollers), and/or gas supply 156 (e.g., via a gas supply valve) using one or more control signals in response to receiving the enable signal(s) from the mobile device 250.

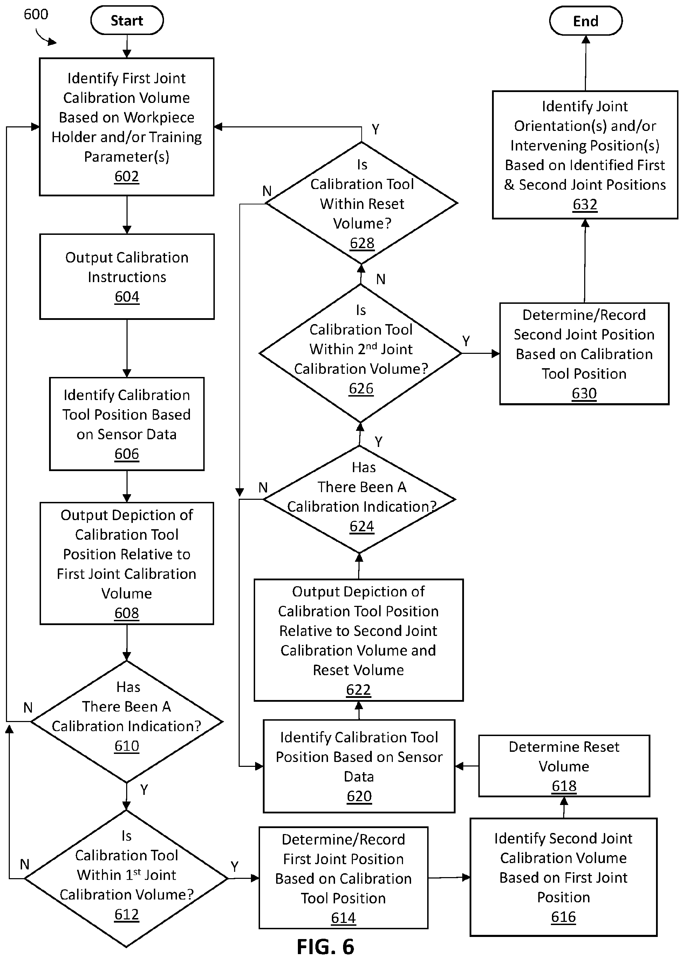

After block 312, the training process 300 is shown as proceeding to block 600 where a joint calibration process 600 is performed to identify the positions of the workpiece joint 176 and/or orientation of the workpiece joint 176 (e.g., relative to an axis perpendicular to the support platform 202). While, in some examples, the positions and/or orientation of the workpiece joint 176 may be otherwise identified (e.g., using tracking sensor data captured by the tracking sensor(s) 252), in some examples, the joint calibration process 600 may be needed to identify the positions and/or orientation of the workpiece joint 176. In some examples, the joint calibration process 600 may be skipped (e.g., if the positions and/or orientation of the workpiece joint 176 have already been identified). The joint calibration process 600 is discussed further below with respect to FIG. 6.

In some examples, data representative of the position(s) and/or orientation(s) of the workpiece joint 176 is saved in the mobile device memory circuitry 258 (e.g., after the joint calibration process 600). In some examples, the positions of the workpiece joint 176 are represented by two or more (e.g., x, y, z) coordinates. In some examples, the positions of the workpiece joint 176 are represented by a coordinate and a length dimension. In some examples, the orientation of the workpiece joint 176 is represented by one or more vectors, such as, for example, a joint orientation vector 502, a base plate surface vector 504, and/or a base plate perpendicular vector 506 (see, e.g., FIG. 5b).

In some examples, the joint orientation vector 502 is a vector that extends parallel to the workpiece joint 176. In some examples, the joint orientation vector 502 may have a length equal to the length of the joint 176. In some examples, the joint orientation vector 502 may be a unitary vector, and the length dimension of the workpiece joint 176 may be separately saved, or not represented at all.

In some examples, the base plate surface vector 504 is a vector that extends perpendicular to the joint orientation vector 502 in a plane parallel to a surface of a workpiece 175 (and/or parallel to the surface of the support platform 202). In some examples, the base plate perpendicular vector 506 is a vector that extends perpendicular to the base plate surface vector 504 and the joint orientation vector 502 (and/or perpendicular to the surface of the support platform 202). In some examples, the base plate surface vector 504 and/or the base plate perpendicular vector 506 may be unitary vectors.

In the example of FIG. 3, after the positions of the workpiece joint 176 and/or orientation of the workpiece joint 176 (e.g., relative to the support platform axis 216) is identified through the joint calibration process 600, the training process 300 proceeds to block 314 where the mobile device processing circuitry 260 determines whether to start the training exercise. In some examples, the determination at block 314 is based on whether an input has been received from the operator indicating that the training exercise should begin (e.g., via the UI panel(s) 222, UI device(s) 264, etc.). If no such input is received, the training process 300 loops back to block 302.

If the mobile device processing circuitry 260 does start the training exercise at block 314, the training process 300 proceeds to block 316, where the mobile device processing circuitry 260 determines whether a welding-type operation has begun. In some examples, this determination is based on whether (e.g., arc, spark, etc.) light produced by the welding-type operation is detected (e.g., by the tracking sensor(s) 252), as discussed above. In some examples (e.g., where a mock and/or simulated welding-type tool 199 is used), the determination may be based on whether one or more signals indicative of a (e.g., mock) welding-type operation are received at the mobile device 250 (e.g., via the mobile device communication circuitry 257 and/or from the welding-type tool 199 and/or welding-type equipment 150).

If the mobile device processing circuitry 260 determines that a welding-type operation has begun, the training process proceeds to block 318 where the mobile device processing circuitry 260 tracks the position(s) and/or orientation(s) of the welding-type tool 199 (e.g., relative to the workpiece(s) 175 and/or workpiece joint 176). In some examples, the mobile device processing circuitry 260 tracks the position(s) and/or orientation(s) of the welding-type tool 199 using tracking sensor data captured by the tracking sensor(s) 252.

In some examples, the mobile device processing circuitry 260 tracks the welding-type tool 199 by identifying and/or tracking the position(s) and/or orientation(s) of the markers 194 on the marker attachment 196 attached to the welding-type tool 199. In some examples, the position/orientation information of the markers 194 and/or marker attachment 196 may be used to determine where and/or how the (e.g., tip/nozzle end of the) welding-type tool 199 is positioned and/or oriented. For example, the position/orientation information of the markers 194 and/or marker attachment 196 may be used in conjunction with known, stored, and/or calibrated dimensions of the welding-type tool 199 to which the marker attachment 196 is attached. More particularly, the position/orientation information of the markers 194 and/or marker attachment 196 may be used in conjunction with known, stored, and/or calibrated position(s) and/or orientation(s) of the marker(s) 194 and/or marker attachment 196 relative to the position(s) and/or orientation(s) of different portions (e.g., the tip/nozzle end) of the welding-type tool 199.

In some examples, the orientation of the welding-type tool 199 may be represented and/or conceptualized in the form of a tool orientation vector 508 (see, e.g., FIG. 5b). In some examples, the tool orientation vector 508 may point parallel to an axis of an electrode, contact tip and/or nozzle assembly of the welding-type tool 199.

FIG. 5b shows an example of how the welding-type tool 199 might be positioned and/or oriented when performing a welding-type operation on/at a workpiece joint 176, such as might occur at block 318. As shown, the welding-type tool 199 is pointed at least somewhat away from the mobile device 250, as might occur when the welding-type tool 199 is held in the right hand of an operator. When so pointed, the welding-type tool 199 may shield the mobile device 250from much of the (e.g., arc, spark, etc.) light produced by the welding-type operation, thereby reducing, minimizing, and/or preventing lens flare. The light blocker 208 and tilt of the mobile device 250 may further reduce, minimize, and/or prevent lens flare as discussed above. Nevertheless, the marker attachment 196 attached to the welding-type tool 199 is still visible to the mobile device 250, thereby allowing for the position(s) and/or orientation(s) of the welding-type tool 199 to be tracked during the welding-type operation.

In the example of FIG. 3, the training process loops through block 318 until the mobile device processing circuitry 260 determines at block 320 that the welding-type operation has ended. In some examples, the determination at block 320 is similar to (and/or the inversion of) the determination at block 316.

In the example of FIG. 3, once the welding-type operation has ended, the training process 300 proceeds to block 322, where one or more technique parameters are determined based on the relative position(s) and/or orientation(s) of the welding-type tool 199, workpiece 175, and/or workpiece joint 176. While shown in FIG. 3 as occurring after the welding-type operation has ended, in some examples, some or all of block 322 (and/or blocks 324-326) may alternatively, or additionally occur during the welding-type operation.

In some examples, the one or more welding technique parameters include work angle, travel angle, contact tip to work distance, arc length, travel speed, aim, weave parameters, and/or other parameters relating to welding technique. In some examples, travel angle and/or work angle are determined based on the angle(s) between the tool orientation vector 508 and one or more orientation vectors of the workpiece joint 176 (e.g., the joint orientation vector 502, base plate perpendicular vector 506, and/or base plate surface vector 504). In some examples, contact tip to work distance and/or arc length is determined based on a distance between a tip/nozzle end of the welding-type tool 199 and the workpiece joint 176. In some examples, travel speed is determined based on a change in the position of the welding-type tool 199 over time. In some examples, aim is determined based on the shortest distance along the workpiece 175 (and/or along the base plate surface vector 504) between a center of the workpiece joint 176 and an intersection of the workpiece 175 and (e.g., an extension of) the tool orientation vector 508.

In the example of FIG. 3, after the technique parameters are determined at block 322, the training process 300 proceeds to block 324 where one or more of the determined technique parameters are compared against one or more target technique parameters. In some examples, the one or more target technique parameters are identified based on one or more training parameters (e.g., selected/detected training exercise, orientation of workpiece 175, type of workpiece joint 176, type of welding-type operation, equipment parameter(s), dominant operator hand, etc.). In some examples, feedback is additionally identified at block 324 based on the comparison(s).

In some examples, the feedback may comprise one or more ratings, scores, grades, text messages, images, videos, sounds, vibrations, and/or appropriate outputs. In some examples, the feedback may identify the determined and/or target technique parameter values at different times of the welding-type operation, and/or average determined/target technique parameter values. In the example of FIG. 3, after block 324, the training process 300 proceeds to block 326 where the feedback is output via the UI device(s) 264 of the mobile device 250, after which the training process 300 ends.

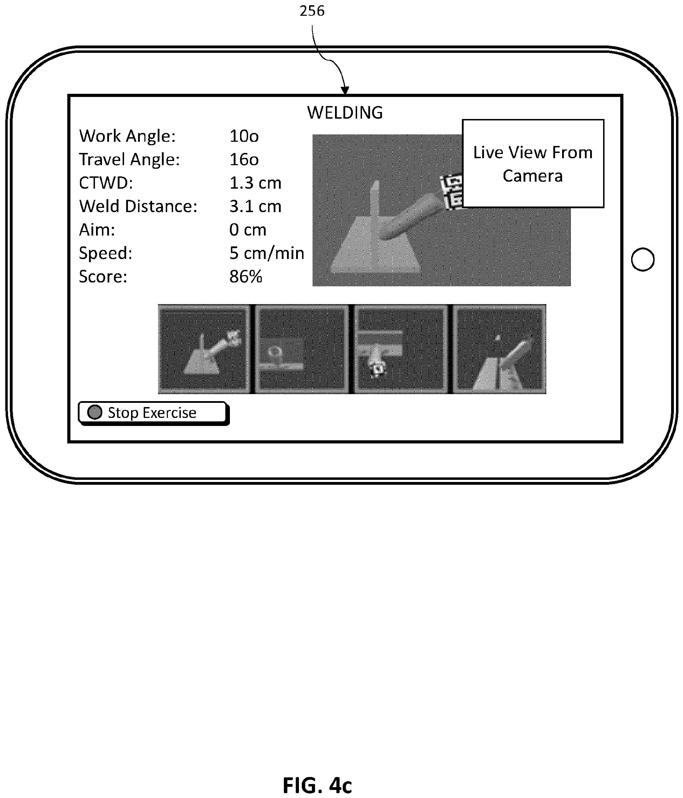

FIG. 4c shows an example of feedback that might be output via the mobile device display screen 256 at block 326 of the training process 300. As shown, the mobile device display screen 256 depicts instantaneous and/or average technique parameter values. The mobile device display screen 256 additionally shows various depictions of the position(s) and/or orientation(s) of the welding-type tool 199 relative to the workpiece(s) 175 and/or workpiece joint 176, such as might be occurring now and/or have occurred during the welding-type operation. In some examples, the mobile device display screen 256 additionally shows a live image/video from the viewpoint of the (e.g., camera) tracking sensor(s) 252.

FIG. 6 is a flowchart illustrating operation of an example joint calibration process 600. In some examples, the joint calibration process 600 provides a way through which the portable technique monitoring system 200 can be calibrated to recognize the position(s) and/or orientation of the workpiece joint 176 (and/or the corresponding orientation vectors). In some examples, the position(s) of the workpiece joint 176 is important for determination of one or more technique parameters (e.g., contact tip to work distance, arc length, etc.). In some examples, orientation of the workpiece joint 176 (and/or the corresponding orientation vectors) is important for determination of one or more technique parameters (e.g., travel angle and/or work angle). In some examples, the mobile device display screen 256 provides real-time feedback to guide an operator through the joint calibration process 600.

In the example of FIG. 6, the joint calibration process begins at block 602, where the mobile device processing circuitry 260 identifies a first joint calibration volume. In some examples, the first joint calibration volume comprises a volume of space where the workpiece joint 176 is expected to be positioned. In some examples, the identification of the first joint calibration volume is based on a known (e.g., hardcoded and/or calibrated) position of the workpiece holder 204 relative to the mobile device 250 (and/or tracking sensor(s) 252).

In some examples, the identification of the first joint calibration volume additionally, or alternatively, is based on one or more of the training parameters (e.g., identified at block 302 of the training process 300). For example, the workpiece joint 176 may be expected to be further to one side or the other relative to the mobile device 250 (and/or tracking sensor(s) 252) depending on whether the operator is left or right handed, as the workpiece 175 will be held by the workpiece holder 204 on one side when the operator is left handed and on the other side when the operator is right handed (see, e.g., FIGS. 2b-2c).

As another example, the workpiece joint 176 may be expected to be closer or farther from the support platform 202 (and/or clamp pad 212) depending on a material type of the workpiece 175 and/or a thickness of the workpiece 175. As another example, the workpiece joint 176 may be expected to be oriented differently (e.g., relative to an axis perpendicular to the support platform 202) depending on the orientation of the workpiece 175 (e.g., relative to the arm axis 118), the operation position of the workpiece joint 176, and/or the type of workpiece joint 176. As another example, the workpiece joint 176 may be expected to be positioned and/or oriented a particular way for a particular training exercise (and/or the training exercise may dictate one or more technique parameters that may in turn dictate a particular positioning and/or orientation).

As another example, the workpiece joint 176 may be expected to be positioned and/or oriented differently for different types of welding-type tools 199. For example, when an operator uses a TIG torch and/or filler rod as the welding-type tool 199, the portable technique monitoring system 200 may require the welding joint 176 to be have an orientation (and/or joint orientation vector 502) that is angularly offset from and/or not parallel with the platform axis 216 by a threshold amount (e.g., 45 degrees). In some examples, this offset may ensure that the tracking sensor(s) 252 can capture tracking sensor data relating to both the TIG torch and filler rod. In some examples, the TIG torch might otherwise substantially obscure the filler rod (and/or a marker attachment 196 on the filler rod) from visibility and/or tracking.

As another example, the portable technique monitoring system 200 may require the welding joint 176 to be positioned farther from the mobile device 250 and/or tracking sensor(s) 252 when an operator is using a stick electrode (and/or stick electrode holder) as the welding-type tool 199. In some examples, stick electrodes can be so long that the marker attachment 196 (e.g., attached to the end of the stick electrode) may be so far away from the workpiece joint 176 that it will be outside the field of view of the tracking sensor(s) 252 if the welding joint 176 is too close. In such an example, the welding joint 176 must be positioned farther away so that the field of view of the tracking sensor(s) 252 can widen enough to capture the marker attachment 196 attached to the far end of the stick electrode (and/or stick electrode holder).

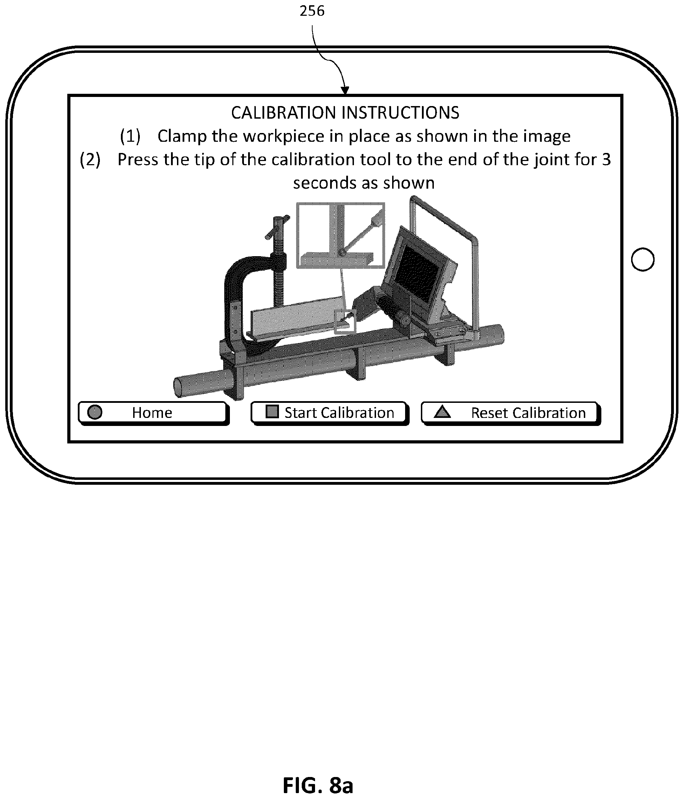

After block 602, the joint calibration process 600 proceeds to block 604, where the mobile device processing circuitry 260 outputs (e.g., via the UI device(s) 264) instructions for how to position and/or orient the workpiece 175 and/or workpiece joint 176 such that the workpiece joint 176 is within the joint calibration volume identified at block 302. FIG. 8a shows an example of calibration instructions that might be output via the mobile device display screen 256 at block 302.

As shown in the example of FIG. 8a, the instructions may include an image showing visually how to position and/or orient the workpiece 175 and/or workpiece joint 176 so that the workpiece joint 176 will lie within the joint calibration volume identified at block 302. As shown in the example of FIG. 8a, the instructions may additionally, or alternatively, include written and/or visual instructions directing the operator to use a calibration tool 700 to identify (e.g., end) points on/of the workpiece joint 176.

FIGS 7a-7b show examples of a calibration tool 700 being used to identify (e.g., end) points on/of the workpiece joint 176. In FIG. 7a, the calibration tool 700 is shown placed at the end of the workpiece joint 176 closest to the mobile device 250. FIG. 7b shows an example of the calibration tool 700 placed at the other/opposite end of the workpiece joint 176, farthest from the mobile device 250.

While shown as being used to identify two endpoints in the examples of FIGS. 7a-7b, in some examples the calibration tool 700 may be used to identify three or more points on and/or along the workpiece joint 176. In some examples, the position(s) and/or orientation of the workpiece joint 176 may be determined by determining a shortest path connecting the identified points, and/or determining a line connecting the identified points. While the calibration tool 700 is shown as being a distinct device in the examples of FIGS. 7a-7b, in some examples the welding-type tool 199 may be used as the calibration tool 700 (e.g., during a calibration mode when the welding-type equipment 150 is disabled).

In the example of FIG. 6, after block 604, the training process 300 tracks and/or identifies the position(s) and/or orientation(s) of the calibration tool 700 at block 606. In some examples, this tracking is facilitated by markers 194 on the calibration tool 700 (as shown, for example, in FIG. 7a), similar to that which is described above with respect to tracking the welding-type tool 199. In some examples, the mobile device memory circuitry 258 includes (and/or stores) one or more (e.g., rigid body) models of the calibration tool 700 (and/or different calibration tools 700) to facilitate tracking.

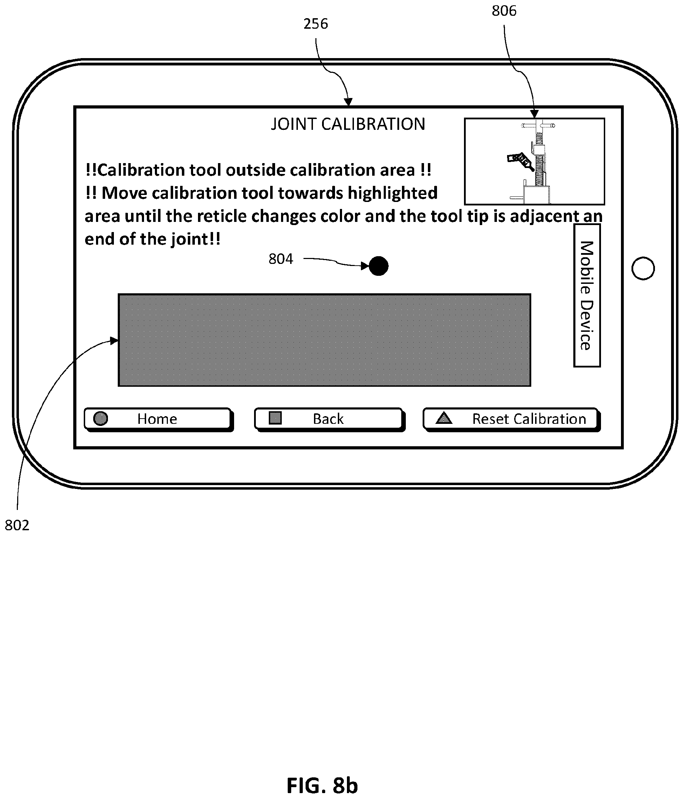

In the example of FIG. 6, after block 606, the joint calibration process 600 proceeds to block 608 where the mobile device processing circuitry 260 outputs (e.g., via the UI device(s) 264) a depiction of the positions and/or orientations of the first joint calibration volume identified at block 602 relative to position(s) and/or orientation(s) of the (e.g., tip end of the) calibration tool 700 identified at block 606. FIGS. 8b-8h show examples of depictions that might be output at block 608.

In the example of FIG. 8b, the mobile device display screen 256 shows a rectangular first joint calibration area 802 that is a two dimensional (2D) representation of the joint calibration volume identified at block 602 relative to the mobile device 250. A circle 804 representing the position of the joint calibration tool 700 is also shown outside of the first joint calibration area 802. A text message is further displayed notifying the operator that the calibration tool 700 is outside the first joint calibration area 802 (and/or first joint calibration volume), and instructing on how to correctly position and/or orient the calibration tool 700 for the joint calibration process 600. A real-time view 806 of the calibration tool 700 relative to the workpiece 175 and/or workpiece joint 176 is also shown from the perspective of a (e.g., camera) tracking sensor 252.

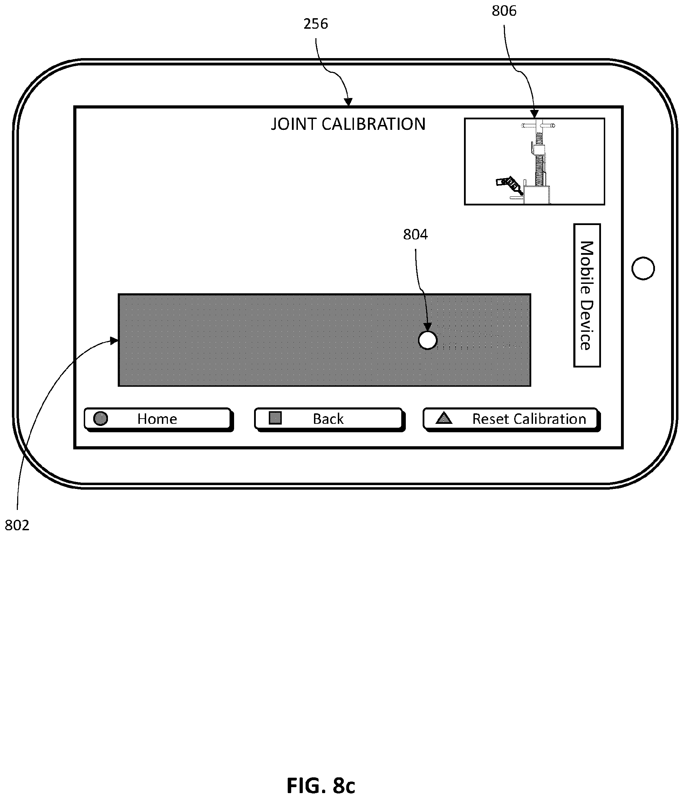

In the example of FIG. 8c, the circle 804 representing the position of the joint calibration tool 700 is shown inside of the first joint calibration area 802. Notably, the color of the circle 804 has changed, indicating that the calibration tool 700 is now within the first joint calibration area 802. The real-time view 806 also shows the calibration tool 700 closer to the workpiece 175 and/or workpiece joint 176.

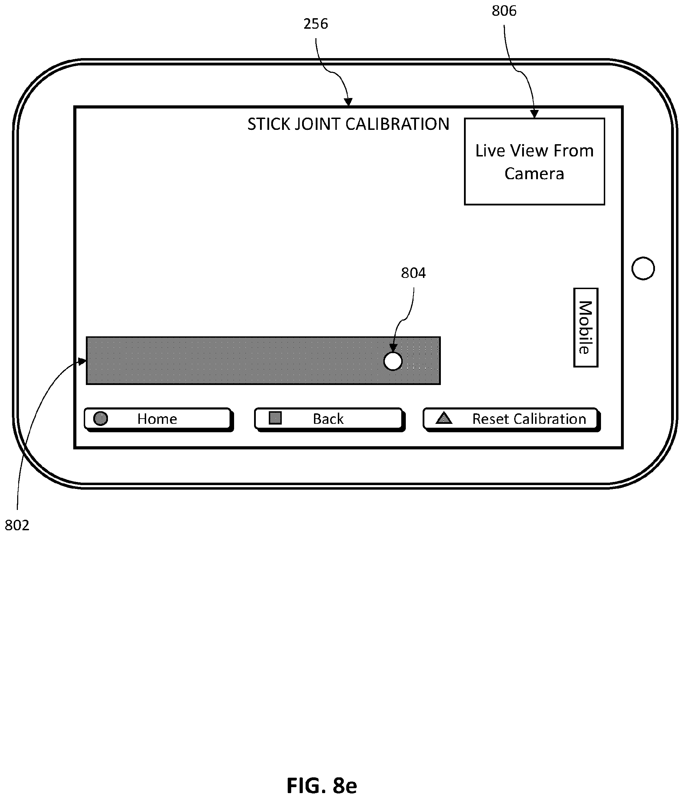

FIG. 8e shows an example where the first joint calibration area 802 is depicted farther from the mobile device 250 than in FIGS. 8b-8c. In some examples, the more distant first joint calibration area 802 shown in FIG. 8e may be used when the welding-type tool 199 is a stick electrode (and/or stick electrode holder), to ensure that the workpiece joint 176 is far enough away from the tracking sensor(s) 252 for the marker attachment 196 to be in the field of view of the tracking sensor(s) 252 (as discussed above).

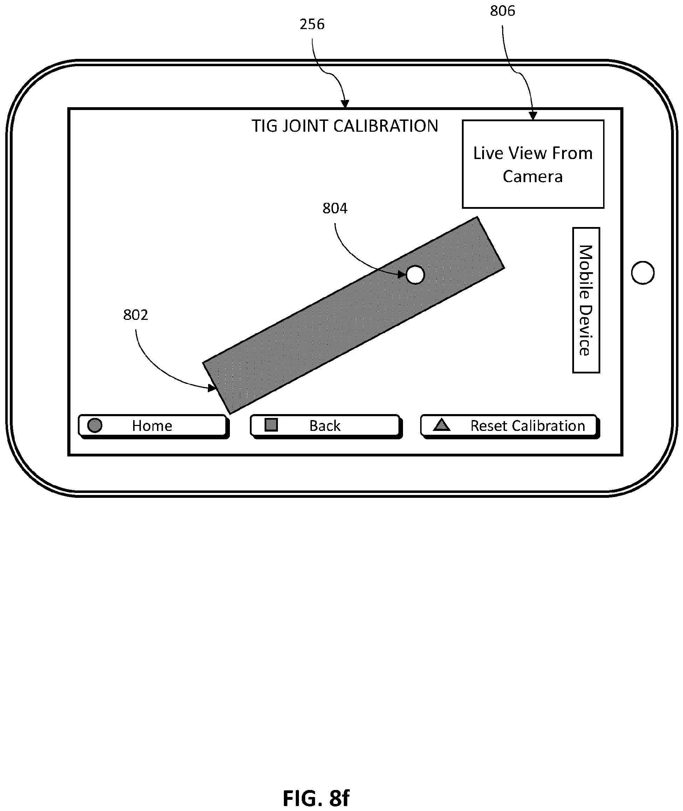

FIG. 8f shows an example where the first joint calibration area 802 is depicted as slanted and/or angled relative to the mobile device 250, rather than approximately perpendicular. In some examples, such a depiction of the first joint calibration area 802 may be used when the welding-type tool 199 is a TIG torch and/or filler rod. In some examples, when the orientation of the workpiece joint 176 is at an angle similar to the first joint calibration area 802, there is a better chance that the TIG torch (and/or its marker attachment) will not fully obscure the filler rod (and/or its marker attachment 196), thereby allowing tracking of both (as discussed above).

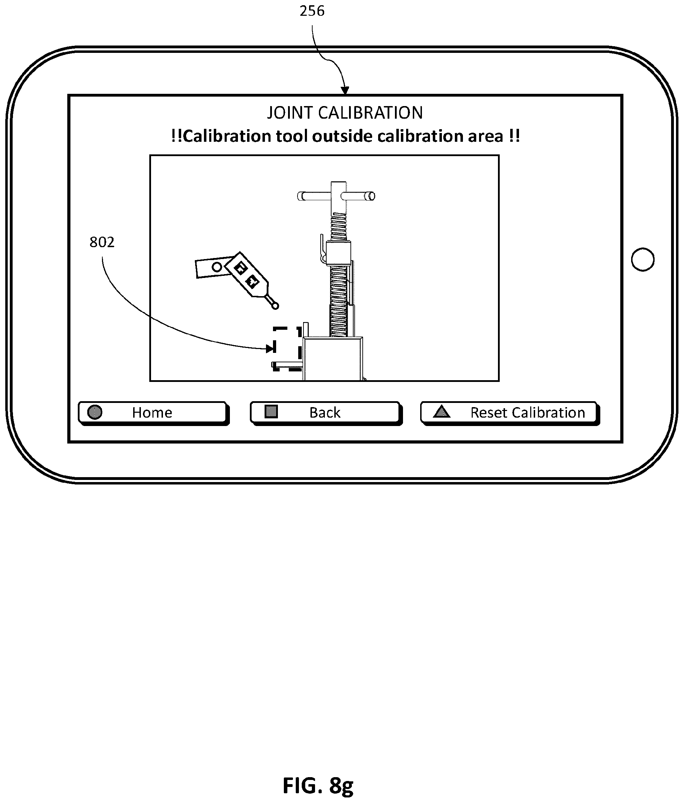

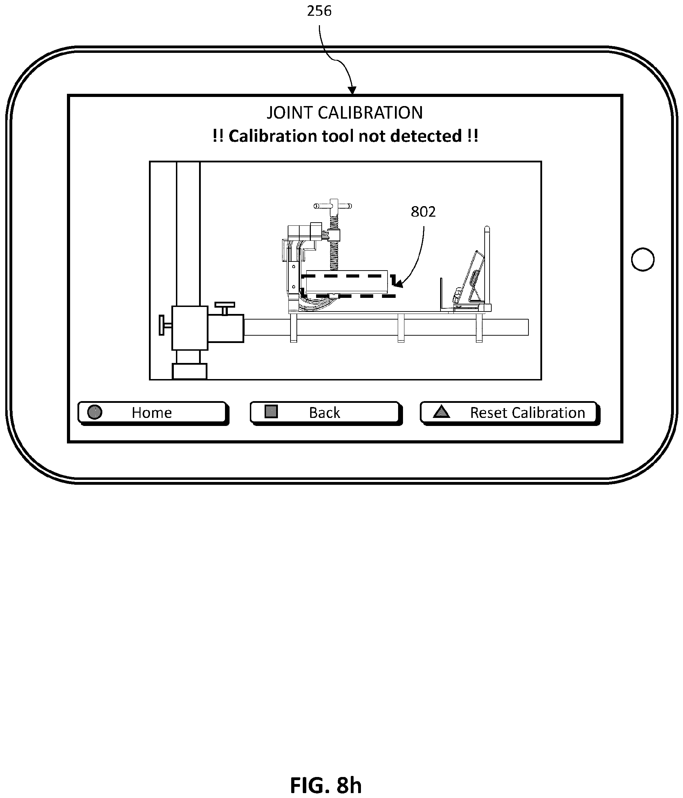

FIG. 8g shows an example where the mobile device display screen 256 depicts the first joint calibration area 802 as an augmentation to a real-time three dimensional (3D) video/image captured by the tracking sensor(s) 252 of the mobile device 250. FIG. 8h shows an example where the mobile device display screen 256 depicts the first joint calibration area 802 relative to 3D representation of the positioning stand 102 and/or portable technique monitoring system 200 as they might be seen from the perspective of an operator. In some examples, these types of augmented reality and/or 3D depictions may provide alternative perspectives to (e.g., hopefully better) help orient and/or inform the operator as to how to properly position and/or orient the workpiece(s) 175, the workpiece joint 176, and/or the calibration tool 700.

In the example of FIG. 6, after block 608, the joint calibration process 600 proceeds to block 610 where the mobile device processing circuitry 260 checks whether there has been a calibration indication. In some examples, a calibration indication is an indication that the position and/or orientation of the (e.g., tip end of the) calibration tool 700 has remained approximately consistent, stationary, and/or unchanging (e.g., within some stored threshold distance/angle) for a threshold amount of time (e.g., stored in the mobile device memory circuitry 258). In some examples, a calibration indication may be a signal received from and/or sent by the calibration tool 700, such as in response to user input received via a user input device of the calibration tool 700 (see, e.g., the calibration button 702 of the calibration tool 700 in FIG. 7a).

If there has been a joint calibration indication, the joint calibration process 600 is shown proceeding to block 612, where the mobile device processing circuitry 260 checks whether the position of the (e.g., tip end of the) calibration tool 700 identified at block 606 is within the first joint calibration volume identified at block 602. If either of the checks at blocks 610-612 are unsuccessful, the joint calibration process 600 returns to block 602.

In the example of FIG. 6, if the checks at block 610 and block 612 are successful, the joint calibration process 600 proceeds to block 614 where the mobile device processing circuitry 260 determines a first joint position of the workpiece joint 176 based on the position of the (e.g., tip end of the) calibration tool 700 (e.g., identified at block 606). In some examples, the first joint position of the workpiece joint determined at block 614 is the same as the position of the (e.g., tip end of the) calibration tool 700 (and/or offset from the position of the calibration tool 700 by some hardcoded and/or calibrated amount). Once the first joint position of the workpiece joint 176 is determined, the first joint position is stored in the mobile device memory circuitry 258.

After block 614, the joint calibration process 600 is shown proceeding to block 616 where the mobile device processing circuitry 260 identifies a second joint calibration volume. In some examples, the second joint calibration volume is a volume of space where a second end of (and/or a second point along) the workpiece joint 176 is expected to be positioned. In some examples, the second joint calibration volume is a subset of the first joint calibration volume identified at block 602.

In some examples, the mobile device processing circuitry 260 identifies the second joint calibration volume based on the first joint position determined and/or recorded at block 614. In some examples, the mobile device processing circuitry 260 additionally, or alternatively, identifies the second joint calibration volume based on the first joint calibration volume identified at block 602. In some examples, the mobile device processing circuitry 260 additionally, or alternatively, identifies the second joint calibration volume based on one or more training parameters.

In the example of FIG. 6, after block 616, the joint calibration process 600 proceeds to block 618 where the mobile device processing circuitry 260 determines a reset volume. In some examples, the reset volume is a volume of space where the (e.g., tip end of the) calibration tool 700 may be placed to indicate a desire by the operator to reset the joint calibration process 600 (e.g., by starting over at block 602). While, in some examples, the calibration tool 700 may instead be positioned proximate a UI panel 222 associated with a restart, the reset volume provides an alternative (and/or potentially more convenient) means by which the operator can reset and/or restart the joint calibration process 600.

In some examples, the reset volume is determined to be a sphere centered at the first joint position (e.g., identified at block 614). In some examples, the radius and/or diameter of the sphere is stored in memory circuitry (e.g., hardcoded, calibrated, and/or based on prior user input). In some examples, the radius and/or diameter of the sphere is determined based on one or more training parameters.

After block 618, the joint calibration process 600 is shown as proceeding to block 620, where the mobile device processing circuitry 260 again tracks and/or identifies the position(s) and/or orientation(s) of the calibration tool700, similar and/or identical to that which is described above with respect to block 606. After block 620, the joint calibration process 600 is shown as proceeding to block 622 where the mobile device processing circuitry 260 outputs (e.g., via the UI device(s) 264) a depiction of the positions and/or orientations of the second joint calibration volume identified at block 616, and/or the reset volume identified at block 618, relative to the position(s) and/or orientation(s) of the (e.g., tip end of the) calibration tool 700 identified at block 620 (e.g., similar to that which is discussed above with respect to block 608).

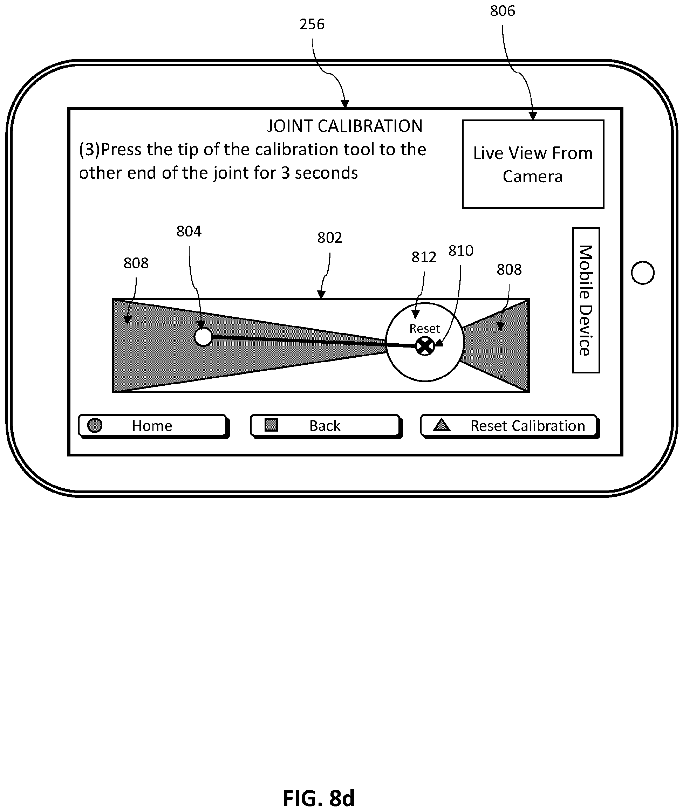

FIG. 8d shows an example of what the mobile device display screen 256 might depict at block 622 of the joint calibration process 600. As shown, in FIG. 8d, the mobile device display screen 256 shows a second joint calibration area 808 that is a subset of the first joint calibration area 802. In particular, the second joint calibration area 808 is shown as comprising two triangles extending two different from the first joint position 810. As shown, each triangle of the second joint calibration area 808 has an apex at the first joint position 810 and a base at either end of the first joint calibration area 802.

In the example of FIG. 8d, the mobile device display screen 256 shows a reset area 812 overlaying a portion of the second joint calibration area 808. As shown, the reset area 812 is depicted as a circle centered on the first joint position 810. The reset area 812 also has a radius/diameter that is small enough to ensure the bounds of the reset area 812 do not exceed the bounds of the first joint calibration area 802. While the second joint calibration volume and reset volume are depicted simply using the 2D second joint calibration area 808 and 2D reset area 812, in some examples the second joint calibration volume and/or reset volume may be depicted in 3D and/or from different perspectives (e.g., similar to that which is shown and discussed with respect to FIGS. 8g-8h).

In the example of FIG. 6, after block 622, the joint calibration process 600 proceeds to block 624, where the mobile device processing circuitry 260 checks whether there has been a calibration indication (e.g., similar or identical to that which is discussed above with respect to block 610). If the check at block 624 is unsuccessful (i.e., there has been no joint calibration indication), the joint calibration process 600 returns to block 620. If, however, there has been a joint calibration indication, the joint calibration process 600 is shown proceeding to block 626, where the mobile device processing circuitry 260 checks whether the position of the (e.g., tip end of the) calibration tool 700 (e.g., identified at block 620) is within the second joint calibration volume (e.g., similar to that which is discussed above with respect to block 612).

If the check at block 626 is unsuccessful, the joint calibration process 600 proceeds to block 628 where the mobile device processing circuitry 260 checks whether the position of the (e.g., tip end of the) calibration tool 700 (e.g., identified at block 620) is within the reset volume (e.g., identified at block 618). If so, the joint calibration process 600 resets, restarts, and/or returns to block 602. If not, the joint calibration process 600 returns to block 620.

If it is determined that there has been a joint calibration indication at block 624, and it is determined at block 626 that the position of the (e.g., tip end of the) calibration tool 700 is within the first joint calibration volume, the joint calibration process 600 is shown as proceeding to block 630. At block 630, the mobile device processing circuitry 260 determines and/or records a second joint position (e.g., similar to that which is discussed above with respect to determining/recording the first joint position at block 614). After block 630, the joint calibration process proceeds to block 632, where the mobile device processing circuitry 260 identifies one or more other (e.g., intervening) joint positions of the workpiece joint 176, and/or the orientation of the workpiece joint 176 (e.g., represented by the orientation vector(s) discussed above), based on the first joint position and/or second joint position identified and/or recorded at blocks 614 and 630.

In some examples, the mobile device processing circuitry 260 identifies the one or more other (e.g., intervening) joint positions of the workpiece joint 176 based on a line that extends between and/or connects the first and second joint positions. In some examples, the mobile device processing circuitry 260 identifies the one or more other (e.g., intervening) joint positions of the workpiece joint 176 based on a shortest path between the first and second joint positions. In some examples, the one or more other (e.g., intervening) joint positions of the workpiece joint 176 are positions along the line and/or shortest path between the first and second joint positions.

In some examples, the mobile device processing circuitry 260 identifies the orientation of the workpiece joint 176 based on the line and/or shortest path between the first and second joint positions. For example, the joint orientation vector 502 may be identified as being a vector parallel to the line and/or shortest path between the first and second joint positions. As another example, the base plate surface vector and/or base plate perpendicular vector may be identified as being vectors perpendicular to the line and/or shortest path between the first and second joint positions (and/or perpendicular to the joint orientation vector 502).

In some examples, the mobile device processing circuitry 260 takes advantage of the configuration(s), shape(s), positioning(s), and/or connections(s) of the portable technique monitoring system 200 to identify the base plate perpendicular vector 506. For example, the workpiece holder 204 is configured, shaped, positioned, and/or attached to the support platform 202 such that a surface of the workpiece 175 held by the workpiece holder 204 will always be approximately parallel to the surface of the support platform 202. Thus, the base plate perpendicular vector 506 will always be perpendicular to the surface of the support platform 202. In some examples, the system 200 can thus be calibrated once to recognize and/or store a single base plate perpendicular vector 506 that can always be used for any (e.g., flat, rectangular, etc.) workpieces 175 held by the workpiece holder 204.

In the example of FIG. 6, the joint calibration process 600 ends after block 632. In some examples, the mobile device processing circuitry 260 outputs a notification (e.g., via the mobile device UI device(s) 264) confirming that the joint calibration process 600 was successful before ending. Once ended, the training process 300 proceeds on, as discussed above, and uses the information about the workpiece joint 176 obtained through the joint calibration process 600 to determine technique parameters and/or provide feedback to the operator regarding the technique parameters, as discussed above.

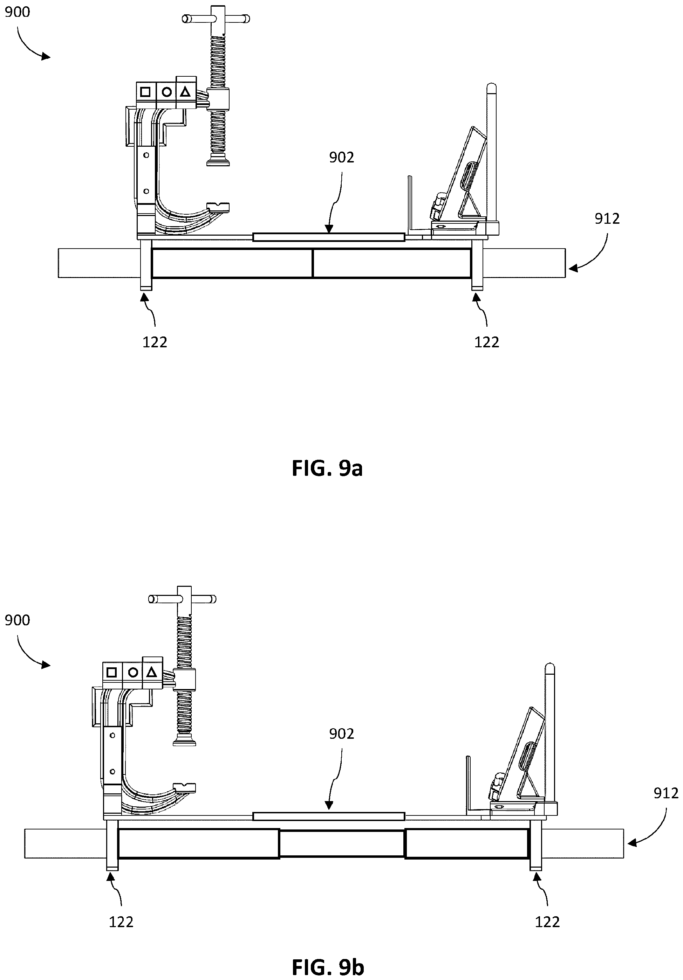

FIGS. 9a-9b show examples of a first alternative portable technique monitoring system 900. As shown, the first alternative portable technique monitoring system 900 is similar (and/or identical) to the portable welding technique monitoring system of FIG. 2a, except that the first alternative portable technique monitoring system 900 includes a first alternative support platform 902.

In the example of FIGS. 9a-9b, the first alternative support platform 902 is similar to the support platform 202 of FIG. 2a, except that that the first alternative portable technique monitoring system 900 is telescoping platform. FIG. 9a shows the telescoping first alternative support platform 902 in a non-extended state. FIG. 9b shows the telescoping first alternative support platform 902 expanded and/or extended to a length that is longer than in FIG. 9a.

In some examples, the ability of the first alternative support platform 902 to telescope and/or move between a more compact/shorter configuration and a more extended/longer configuration allows the first alternative portable technique monitoring system 900 to accommodate larger workpieces 175 when needed. In particular, when in the extended/longer configuration, the telescoping first alternative support platform 902 provides more space for a workpiece 175 to fit between the workpiece holder 204 and mobile device holder 206.

In some examples, when in the extended/longer configuration, the telescoping first alternative support platform 902 also allows for the workpiece joint 176 to be positioned farther from the mobile device 250 (and/or tracking sensor(s) 252), which may be helpful in select situations (e.g., where the welding-type tool 199 is a stick electrode and/or stick electrode holder). In some examples, when there is no need for more space, the telescoping first alternative support platform 902 can be moved to its compact/shorter configuration, which may be easier to handle, manipulate, and/or carry.

In the example of FIGS. 9a-9b, the telescoping first alternative support platform 902 is attached to a telescoping first alternative positioning stand support arm 912. As shown, the first alternative positioning stand support arm 912 is configured to expand and/or retract in coordination with the telescoping first alternative support platform 902. However, in some examples, the positioning stand support arm 112 of FIG. 2a may be used instead, and the support platform connectors 122 may simply be configured to slide along the positioning stand support arm 112 when the telescoping first alternative support platform 902 expands and/or retracts.

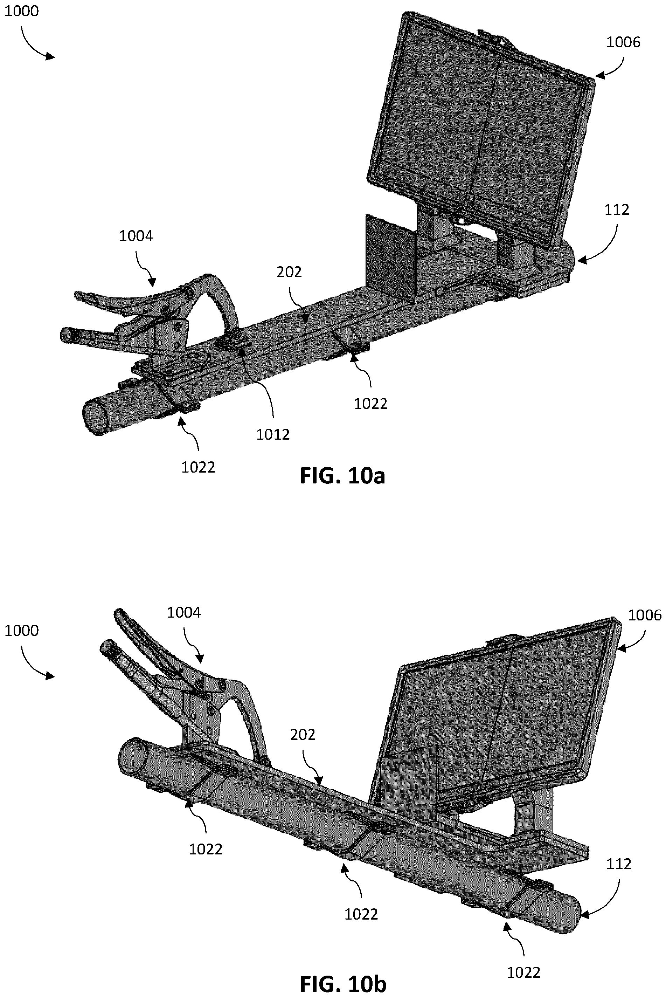

FIGS. 10a-10b show examples of a second alternative portable technique monitoring system 1000. As shown, the second alternative portable technique monitoring system 1000 of FIGS. 10a-10b is similar to the portable technique monitoring system 200 of FIG. 2a, except that the second alternative portable technique monitoring system 1000 has an alternative workpiece holder 1004, an alternative mobile device holder 1006, and alternative support platform connectors 1012.

In the examples of FIGS. 10-10b, the alternative support platform connectors 1022 are shown as comprised of pairs of approximately U and/or V shaped brackets fastened together around the positioning stand support arm 112. As shown, one of each pair of alternative support platform connectors 1022 is coupled to both the support platform 202 and to its paired partner (e.g., via one or more fasteners). In some examples, the one that is not connected to the support platform 202 can be disconnected, leaving only one of each pair of alternative support platform connectors 1022, which may be used as legs to stand the second alternative portable technique monitoring system 1000 on a table.

In the examples of FIGS. 10a-10b, the alternative mobile device holder 1006 is sized to fit larger mobile devices 250 (e.g., tablets). As shown, the alternative mobile device holder 1006 is also centered with respect to the support platform 202 (e.g., since some larger mobile devices 250 have at least one tracking sensor 252 positioned at an approximate center of the longer edge). In some examples, the centered positioning may be more aesthetically pleasing than having the mobile device holder 206 offset to one side as in the portable technique monitoring system 200 of FIG. 2a.

In the examples of FIGS. 10a-10b, the alternative workpiece holder 1004 is shown as being a bench clamp. Rather than holding the workpiece 175 between a screw pad 214 and a clamp pad 212 as in FIG. 2a, the alternative workpiece holder 1004 is configured to hold the workpiece 175 between its alternative clamp pad 1012 and the support platform 202. While not shown in the examples of FIGS. 10a-10b, in some examples, one or more UI panels 222 may be coupled to the alternative workpiece holder 1004 similar to that which is shown with respect to the workpiece holder 204 in FIG. 2a.

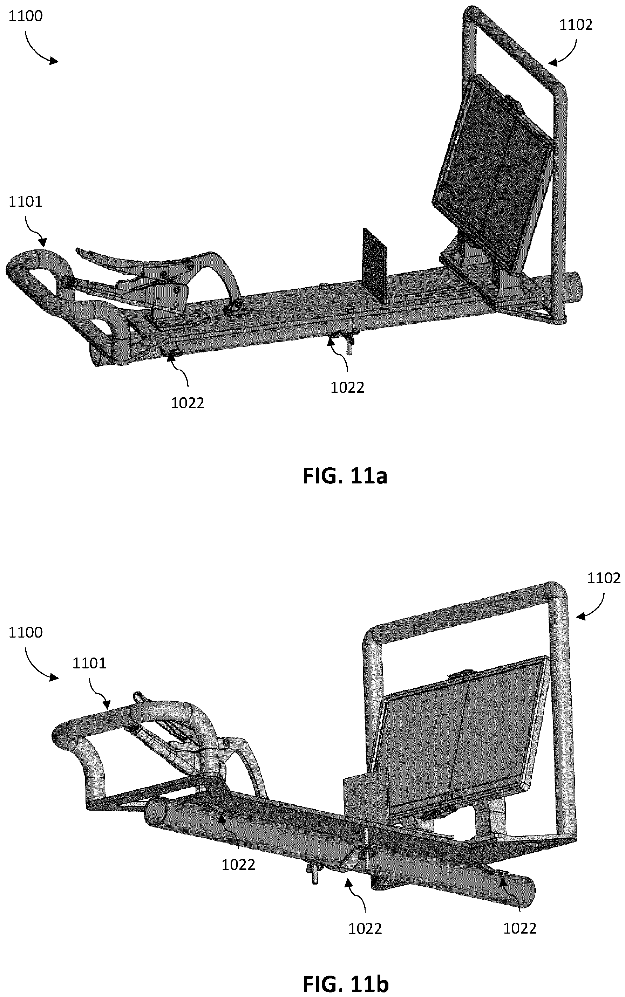

FIGS. 11a-11b show examples of a third alternative portable technique monitoring system 1100. As shown, the third alternative portable technique monitoring system 1100 of FIGS. 11a-11b is similar to the second alternative portable technique monitoring system 1000 of FIGS. 10a-10b, except that the third alternative portable technique monitoring system 1100 has only one of each pair of alternative support platform connectors 1022, as well as a second handle 1102.

In the examples of FIGS. 11a-11b, the second handle 1101 is coupled to the support platform 202 at an opposite end of the support platform 202 from a first handle 1102. In some examples, having both a first handle 1102 and a second handle 1101 allows the second alternative portable technique monitoring system 1000 to be more easily lifted and/or transported than if there was only one handle. In some examples, having only one of each pair of alternative support platform connectors 1022 makes it easier to configure the third alternative portable technique monitoring system 1100 to be stood and/or positioned on a table top (e.g., rather than a positioning stand support arm 112).

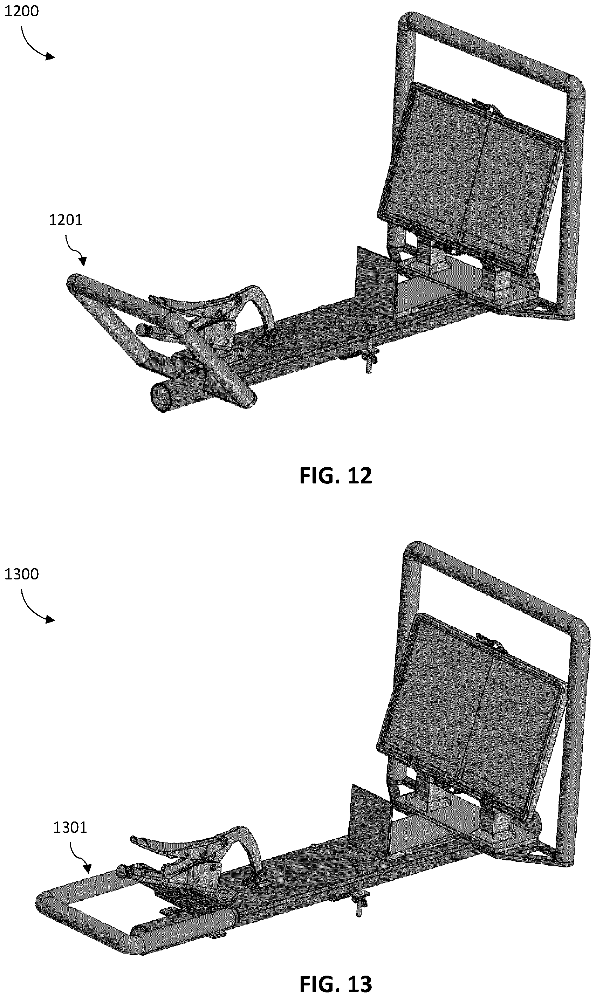

FIG. 12 shows an example of a fourth alternative portable technique monitoring system 1200. As shown, the fourth alternative portable technique monitoring system 1200 is similar (and/or identical) to the third alternative portable technique monitoring system 1100, except that the fourth alternative portable technique monitoring system 1200 has an alternative second handle 1201. While, in some examples, the alternative second handle 1201 may make it more difficult to stand the fourth alternative portable technique monitoring system 1200 on a tabletop, it my also make the fourth alternative portable technique monitoring system 1200 easier to manufacture. FIG. 13 shows an example of a fifth alternative portable technique monitoring system 1300 that is similar (and/or identical) to the fourth alternative portable technique monitoring system 1200, except for the second alternative second handle 1301.

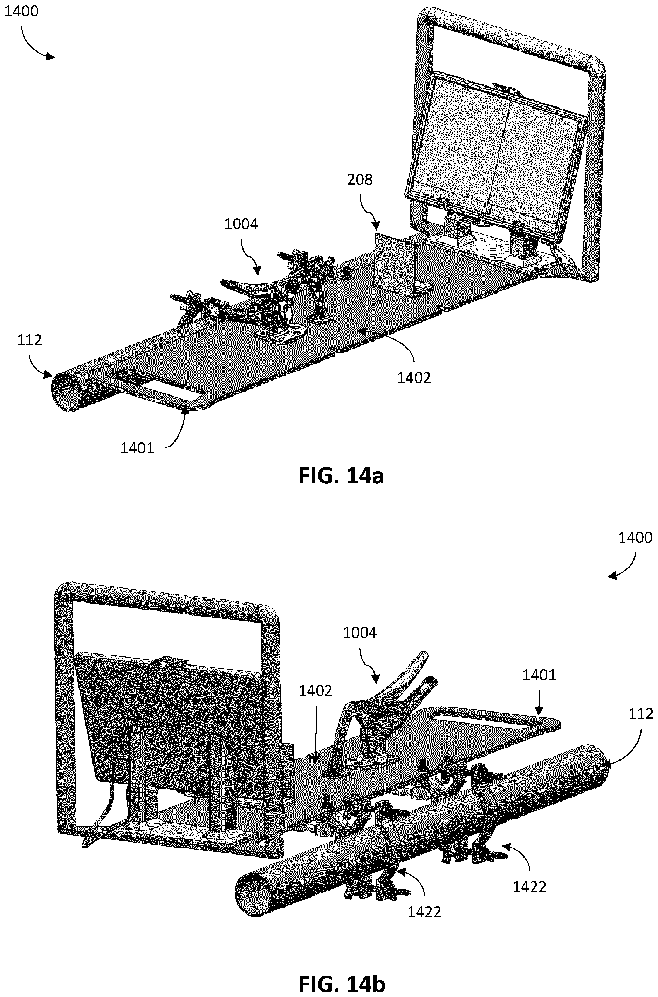

FIGS. 14a-14b show examples of a sixth alternative portable technique monitoring system 1400. As shown, the sixth alternative portable technique monitoring system 1400 is similar (and/or identical) to the fifth alternative portable technique monitoring system 1300, except that the sixth alternative portable technique monitoring system 1400 has second alternative support platform connectors 1422 and a second alternative support platform 1402.

The second alternative support platform 1402 is shown as being formed with a support platform handle 1401. The support platform handle 1401 is shown as being integral with the second alternative support platform 1402. The second alternative support platform 1302 is also shown as being larger than the support platform 202 of the fourth alternative portable technique monitoring system 1200, with approximately the same amount of surface area between the workpiece holder 1004 and light blocker 208 as between the workpiece holder 1004 and the support platform handle 1401.

In some examples, the additional surface area of the second alternative support platform 1402 can help to accommodate workpieces 175 positioned farther from the mobile device 250 (e.g., in situations where the welding-type tool 199 is a stick electrode and/or stick electrode holder). In some examples, the alternative workpiece holder 1004 is configured to be turned to face the opposite direction (e.g., via a swivel mechanism and/or by uncoupling, turning, then recoupling to the second alternative support platform 1402).

In the examples of FIGS. 14a-14b, the second alternative support platform connectors 1422 comprise brackets clamped around the positioning stand support arm 112. The second alternative support platform connectors 1422 are shown coupled to the second alternative support platform 1402 via cam lock fastening mechanisms. In some examples, the second alternative support platform connectors 1422 may be disconnected from (and/or reattached to) the second alternative support platform 1402 via the cam lock fastening mechanisms. In some examples, the second alternative support platform 1402 can be laid flat on a table once the second alternative support platform connectors 1042 are disconnected from the second alternative support platform 1402.

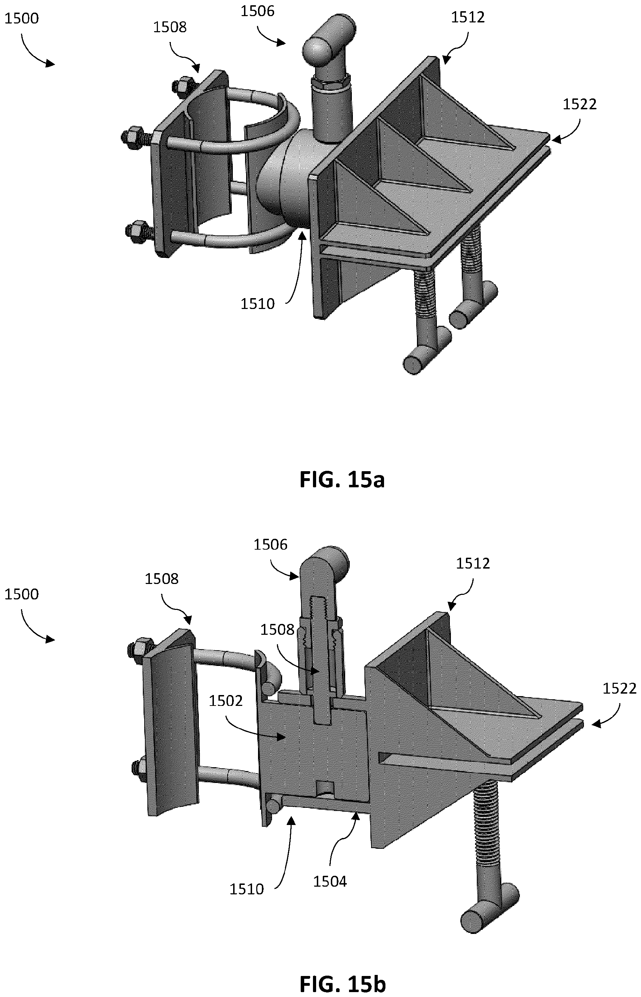

FIGS. 15a-15b show a positioning stand coupler 1500 that might be used to connect the positioning stand 102 with any of the above discussed portable technique monitoring systems 200, 1000, 1100, 1200, 1300, 1400. In some examples, the positioning stand coupler 1500 is used in place of the positioning stand support arm 112 and/or positioning stand post sleeve 108 (and/or support platform connectors 122, 1022, 1422). In some examples, the positioning stand coupler 1500 may be considered part of the positioning stand 102.

In the examples of FIGS. 15a-15b, the positioning stand coupler 1500 includes a first alternative positioning stand post sleeve 1508 rotatably attached to an alternative positioning stand support arm 1512 through a first alternative positioning stand arm sleeve 1510. As shown, the first alternative positioning stand post sleeve 108 is a clamp configured to go around the positioning stand post 106 (e.g., in place of the positioning stand post sleeve 108). In some examples, the connection between the first alternative positioning stand post sleeve 108 and the positioning stand post 106 can be loosened or tightened by loosening or tightening the fasteners of the first alternative positioning stand post sleeve 108.

The alternative positioning stand support arm 1512 is shown as comprising an alternative support connector 1522. The alternative support connector 1522 is shown as a duckbill clamp with T nuts configured to open and/or close the duckbill (e.g., by widening and/or narrowing the gap between the duck bills). In some examples, the alternative support connector 1522 (e.g., duckbill clamp) of the alternative positioning stand support arm 1512 is configured to connect to and/or clamp onto the support platform(s) 202, 1402, thereby connecting the positioning stand 102 to the portable technique monitoring system(s) 200, 1000, 1100, 1200, 1300, 1400.

In the examples of FIGS. 15a-15b, the first alternative positioning stand arm sleeve 1510 includes an inner cylinder 1502 and an outer cylinder 1504. The inner cylinder 1502 is shown as including several pin slots positioned around an inner cylinder 1502. The outer cylinder 1504 is shown as including a single pin hole that may be aligned with one of the pin slots. The first alternative positioning stand arm sleeve 1510 is also shown as including an adjustment knob 1506 attached to a (e.g., spring loaded) pin 1508 that is configured to extend through the aligned pin hole and pin slot, to connect together the inner cylinder 1502 and outer cylinder 1504.

In some examples, when the pin 1508 does not extend through an aligned pin hole and pin slot of the inner cylinder 1504 and outer cylinder 1504, the inner cylinder 1502 and outer cylinder 1504 may move and/or rotate with respect to one another. When the inner cylinder 1502 and/or outer cylinder 1504 rotate with respect to one another, the alternative positioning stand coupler 1500 is rotated relative to the alternative post coupling sleeve 1512. In some examples, the rotating cylinders 1502, 1504 of the positioning stand coupler 1500 allow for more versatile movement and/or positioning of the above discussed portable technique monitoring systems 200, 1000, 1100, 1200, 1300, 1400.

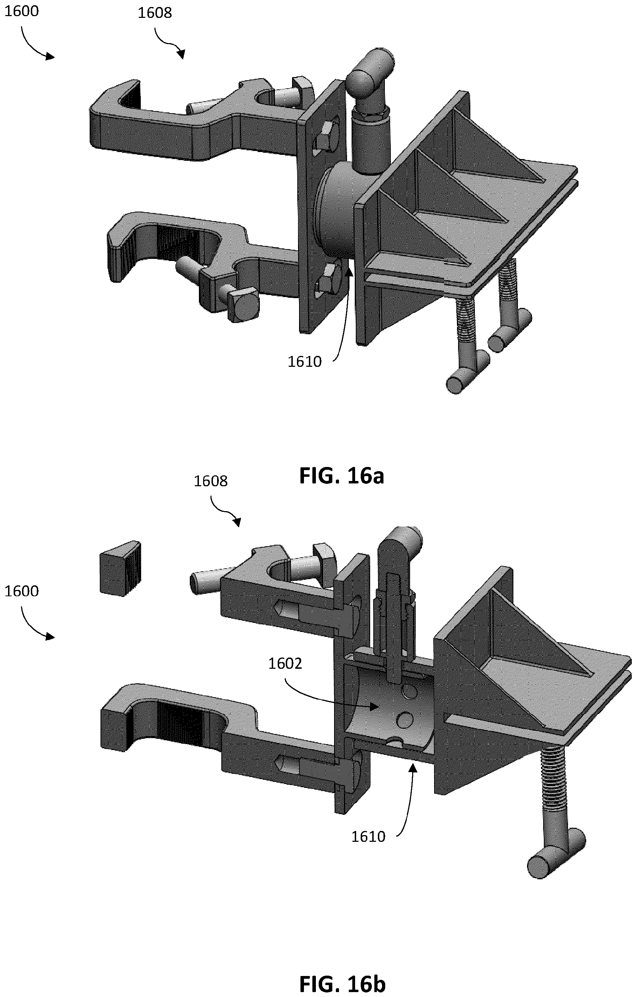

FIGS. 16a-16b show an alternative positioning stand coupler 1600 that is similar (and/or identical) to the positioning stand coupler 1600, except that the alternative positioning stand coupler 1600 has a second alternative positioning stand post sleeve 1608 and second alternative positioning stand arm sleeve 1610. The second alternative positioning stand post sleeve 1608 is shown with a hollow second alternative inner cylinder 1602. In some examples, a similar second alternative positioning stand post sleeve 1608 may be used to connect the positioning stand support arm 112 to the positioning stand arm sleeve 110 in the positioning stand 102 of FIGS. 1a-1e (e.g., where the positioning stand arm sleeve 110 comprises the outer cylinder 1504 and the positioning stand support arm 112 comprises the inner cylinder 1502).

In some examples, the portable technique monitoring systems 200, 1000, 1100, 1200, 1300, 1400 discussed above are low-cost, lightweight, user friendly, self contained, and/or highly portable systems through which operator technique can be monitored during a live welding-type operation, In some examples, the portable technique monitoring systems 200, 1000, 1100, 1200, 1300, 1400 are designed to work with a mobile device 250 that is relatively low cost, user friendly, and/or highly portable (e.g., as compared to some other expensive and/or stationary sensor/processing systems used in other monitoring systems). The few custom components that are required for the portable technique monitoring systems 200, 1000, 1100, 1200, 1300, 1400 are relatively low cost, lightweight, and highly portable, as are the systems 200, 1000, 1100, 1200, 1300, 1400 themselves, making them a very attractive solution for technique monitoring in both training and production scenarios.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As used herein, the terms "e.g.," and "for example" set off lists of one or more nonlimiting examples, instances, or illustrations.

As used herein, the term "approximately," when applied to an angle and/or orientation, means within 5 degrees of the specified angle and/or orientation. As used herein, the term "approximately," when applied to a position, means within 5 centimeters of the specified position.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, the term "processor" and/or "processing circuitry" means processing devices, apparatus, programs, circuits, components, systems, and subsystems, whether implemented in hardware, tangibly embodied software, or both, and whether or not it is programmable. The term "processor" and/or "processing circuitry" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor and/or processing circuitry may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory," "memory circuitry," and/or "memory device" means computer hardware or circuitry to store information for use by a processor and/or other digital device. The memory, memory circuitry, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory, memory circuitry, and/or memory device(s) can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory circuitry, and/or memory device(s) can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.

Embodiments of the invention are described in the following numbered clauses:
Clause 1. A non-transitory computer readable medium comprising machine readable instructions which, when executed by processing circuitry, cause the processing circuitry to:
   identify a joint calibration area within which a joint of a workpiece should be positioned to enable tracking of a welding-type tool when the welding-type tool performs a welding-type operation at the joint; and
   output, via a user interface, a depiction of the joint calibration area.
Clause 2. The non-transitory computer readable medium of clause 1, wherein the joint calibration area is identified based on workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation.
Clause 3. The non-transitory computer readable medium of clause 1, wherein the machine readable instructions, when executed by processing circuitry, further cause the processing circuitry to:
   identify a calibration tool position of a calibration tool based on tool tracking sensor data captured by a tool tracking sensor; and
   determine whether the calibration tool position is within the joint calibration area.
Clause 4. The non-transitory computer readable medium of clause 3, wherein the machine readable instructions, when executed by processing circuitry, further cause the processing circuitry to:
   in response to determining the calibration tool position is not within the joint calibration area:
   update the depiction to indicate that the calibration tool is not within the joint calibration area,
   output a notification, via the user interface, indicating that the calibration tool is not within the joint calibration area, or
   output guidance, via the user interface, advising how to bring the calibration tool within the joint calibration area.
Clause 5. The non-transitory computer readable medium of clause 3, wherein the machine readable instructions, when executed by processing circuitry, further cause the processing circuitry to:
   in response to determining the calibration tool position is within the joint calibration area, determine a joint position or a joint orientation of the joint based on the calibration tool position.
Clause 6. The non-transitory computer readable medium of clause 5, wherein the tool tracking sensor data comprises first tool tracking sensor data captured by the tool tracking sensor at a first time, and the machine readable instructions, when executed by processing circuitry, further cause the processing circuitry to:
   identify a welding-type tool position or a welding-type tool orientation of a welding-type tool based on second tool tracking sensor data captured by the tool tracking sensor at a second time;
   determine a welding technique parameter based on the joint position or the joint orientation of the joint, and the welding-type tool position or the welding-type tool orientation of the welding-type tool; and
   output the welding technique parameter via the user interface.
Clause 7. The non-transitory computer readable medium of clause 6, wherein the first time is not during a welding-type operation and the second time is during the welding-type operation.
Clause 8. A method, comprising:
   identifying, via processing circuitry, a joint calibration area within which a joint of a workpiece should be positioned to enable tracking of a welding-type tool via a tool tracking sensor when the welding-type tool performs a welding-type operation; and
   outputting, via a user interface, a graphical depiction highlighting the joint calibration area relative to the tool tracking sensor.
Clause 9. The method of clause 8, wherein the joint calibration area is identified based on a workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation.
Clause 10. The method of clause 8, further comprising:
   identifying, via the processing circuitry, a calibration tool position of a calibration tool based on tool tracking sensor data captured by a tool tracking sensor; and
   determining whether the calibration tool position is within the joint calibration area.
Clause 11. The method of clause 10, further comprising:
   in response to determining the calibration tool position is not within the joint calibration area:
   update the depiction to indicate that the calibration tool is not within the joint calibration area,
   output a notification, via the user interface, indicating that the calibration tool is not within the joint calibration area, or
   output guidance, via the user interface, advising how to bring the calibration tool within the joint calibration area.
Clause 12. The method of clause 10, further comprising:
   in response to determining the calibration tool position is within the joint calibration area, determining, via the processing circuitry, a joint position or a joint orientation of the joint based on the calibration tool position.
Clause 13. The method of clause 12, wherein the tool tracking sensor data comprises first tool tracking sensor data captured by the tool tracking sensor at a first time, the method further comprising:
   identify a welding-type tool position or a welding-type tool orientation of a welding-type tool based on second tool tracking sensor data captured by the tool tracking sensor at a second time;
   determine a welding technique parameter based on the joint position or the joint orientation of the joint, and the welding-type tool position or the welding-type tool orientation of the welding-type tool; and
   output the welding technique parameter via the user interface.
Clause 14. The method of clause 13, wherein the first time is not during a welding-type operation and the second time is during the welding-type operation.
Clause 15. A welding-type system, comprising:
   processing circuitry configured to identify a joint calibration area within which a joint of a workpiece should be positioned to enable tracking of a welding-type tool when the welding-type tool performs a welding-type operation at the joint; and
   a user interface configured to output a depiction of the joint calibration area.
Clause 16. The welding-type system of clause 15, wherein the joint calibration area is identified based on workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation.
Clause 17. The welding-type system of clause 15, wherein the processing circuitry is further configured to:
   identify a calibration tool position of a calibration tool based on tool tracking sensor data captured by a tool tracking sensor; and
   determine whether the calibration tool position is within the joint calibration area.
Clause 18. The welding-type system of clause 17, wherein the processing circuitry is further configured to:
   in response to determining the calibration tool position is not within the joint calibration area:
   update the depiction to indicate that the calibration tool is not within the joint calibration area,
   output a notification, via the user interface, indicating that the calibration tool is not within the joint calibration area, or
   output guidance, via the user interface, advising how to bring the calibration tool within the joint calibration area.
Clause 19. The welding-type system of clause 15, wherein the processing circuitry is further configured to: in response to determining the calibration tool position is within the joint calibration area, determine a joint position or a joint orientation of the joint based on the calibration tool position.
Clause 20. The welding-type system of clause 19, wherein the tool tracking sensor data comprises first tool tracking sensor data captured by the tool tracking sensor at a first time, and the processing circuitry is further configured to:
   identify a welding-type tool position or a welding-type tool orientation of a welding-type tool based on second tool tracking sensor data captured by the tool tracking sensor at a second time,
   determine a welding technique parameter based on the joint position or the joint orientation of the joint, and the welding-type tool position or the welding-type tool orientation of the welding-type tool, and
   output the welding technique parameter via the user interface.

## Claims

1. A non-transitory computer readable medium comprising machine readable instructions which, when executed by processing circuitry, cause the processing circuitry to:
identify a joint calibration area within which a joint of a workpiece should be positioned to enable tracking of a welding-type tool when the welding-type tool performs a welding-type operation at the joint; and
output, via a user interface, a depiction of the joint calibration area.

2. The non-transitory computer readable medium of claim 1, wherein the joint calibration area is identified based on workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation.

3. The non-transitory computer readable medium of claim 1 or claim 2, wherein the machine readable instructions, when executed by processing circuitry, further cause the processing circuitry to:
identify a calibration tool position of a calibration tool based on tool tracking sensor data captured by a tool tracking sensor; and
determine whether the calibration tool position is within the joint calibration area.

4. The non-transitory computer readable medium of claim 3, wherein the machine readable instructions, when executed by processing circuitry, further cause the processing circuitry to:
in response to determining the calibration tool position is not within the joint calibration area:
update the depiction to indicate that the calibration tool is not within the joint calibration area,
output a notification, via the user interface, indicating that the calibration tool is not within the joint calibration area, or
output guidance, via the user interface, advising how to bring the calibration tool within the joint calibration area.

5. The non-transitory computer readable medium of claim 3, wherein the machine readable instructions, when executed by processing circuitry, further cause the processing circuitry to:
in response to determining the calibration tool position is within the joint calibration area, determine a joint position or a joint orientation of the joint based on the calibration tool position,
optionally wherein the tool tracking sensor data comprises first tool tracking sensor data captured by the tool tracking sensor at a first time, and the machine readable instructions, when executed by processing circuitry, further cause the processing circuitry to:
identify a welding-type tool position or a welding-type tool orientation of a welding-type tool based on second tool tracking sensor data captured by the tool tracking sensor at a second time;
determine a welding technique parameter based on the joint position or the joint orientation of the joint, and the welding-type tool position or the welding-type tool orientation of the welding-type tool; and
output the welding technique parameter via the user interface,
further optionally wherein the first time is not during a welding-type operation and the second time is during the welding-type operation.

6. A method, comprising:
identifying, via processing circuitry, a joint calibration area within which a joint of a workpiece should be positioned to enable tracking of a welding-type tool via a tool tracking sensor when the welding-type tool performs a welding-type operation; and
outputting, via a user interface, a graphical depiction highlighting the joint calibration area relative to the tool tracking sensor.

7. The method of claim 6, wherein the joint calibration area is identified based on a workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation.

8. The method of claim 6 or claim 7, further comprising:
identifying, via the processing circuitry, a calibration tool position of a calibration tool based on tool tracking sensor data captured by a tool tracking sensor; and
determining whether the calibration tool position is within the joint calibration area,
optionally wherein the method further comprises:
in response to determining the calibration tool position is not within the joint calibration area:
update the depiction to indicate that the calibration tool is not within the joint calibration area,
output a notification, via the user interface, indicating that the calibration tool is not within the joint calibration area, or
output guidance, via the user interface, advising how to bring the calibration tool within the joint calibration area.

9. The method of claim 8, further comprising:
in response to determining the calibration tool position is within the joint calibration area, determining, via the processing circuitry, a joint position or a joint orientation of the joint based on the calibration tool position,
optionally wherein the tool tracking sensor data comprises first tool tracking sensor data captured by the tool tracking sensor at a first time, the method further comprising:
identify a welding-type tool position or a welding-type tool orientation of a welding-type tool based on second tool tracking sensor data captured by the tool tracking sensor at a second time;
determine a welding technique parameter based on the joint position or the joint orientation of the joint, and the welding-type tool position or the welding-type tool orientation of the welding-type tool; and
output the welding technique parameter via the user interface,
further optionally wherein the first time is not during a welding-type operation and the second time is during the welding-type operation.

10. A welding-type system, comprising:
processing circuitry configured to identify a joint calibration area within which a joint of a workpiece should be positioned to enable tracking of a welding-type tool when the welding-type tool performs a welding-type operation at the joint; and
a user interface configured to output a depiction of the joint calibration area.

11. The welding-type system of claim 10, wherein the joint calibration area is identified based on workpiece orientation of the workpiece, a selected training exercise, a joint type of a joint of the workpiece, a tool type of the welding-type tool that will perform the welding-type operation, an operation type of the welding-type operation that will be performed, an equipment parameter that will be used to configure welding-type equipment for the welding-type operation, or an operator characteristic of an operator that will perform the welding-type operation.

12. The welding-type system of claim 10 or claim 11, wherein the processing circuitry is further configured to:
identify a calibration tool position of a calibration tool based on tool tracking sensor data captured by a tool tracking sensor; and
determine whether the calibration tool position is within the joint calibration area.

13. The welding-type system of claim 12, wherein the processing circuitry is further configured to:
in response to determining the calibration tool position is not within the joint calibration area:
update the depiction to indicate that the calibration tool is not within the joint calibration area,
output a notification, via the user interface, indicating that the calibration tool is not within the joint calibration area, or
output guidance, via the user interface, advising how to bring the calibration tool within the joint calibration area.

14. The welding-type system of any one of claim 10 to claim 13, wherein the processing circuitry is further configured to: in response to determining the calibration tool position is within the joint calibration area, determine a joint position or a joint orientation of the joint based on the calibration tool position.

15. The welding-type system of claim 14, wherein the tool tracking sensor data comprises first tool tracking sensor data captured by the tool tracking sensor at a first time, and the processing circuitry is further configured to:
identify a welding-type tool position or a welding-type tool orientation of a welding-type tool based on second tool tracking sensor data captured by the tool tracking sensor at a second time,
determine a welding technique parameter based on the joint position or the joint orientation of the joint, and the welding-type tool position or the welding-type tool orientation of the welding-type tool, and
output the welding technique parameter via the user interface.
